(19) Europäisches Patentamt
European Patent Office
Office européen des brevets

(11) **EP 4 730 009 A1**

(12) **EUROPEAN PATENT APPLICATION**
published in accordance with Art. 153(4) EPC

(43) Date of publication:
**22.04.2026 Bulletin 2026/17**

(21) Application number: **25751668.2**

(22) Date of filing: **07.02.2025**

(51) International Patent Classification (IPC):
**G02B 13/00** (2006.01)  **G03B 17/17** (2021.01)
**G03B 30/00** (2021.01)

(52) Cooperative Patent Classification (CPC):
**G02B 13/00; G02B 13/18; G03B 17/17;
G03B 30/00**

(86) International application number:
**PCT/CN2025/076271**

(87) International publication number:
**WO 2025/168069 (14.08.2025 Gazette 2025/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.02.2024 CN 202410177143
23.02.2024 CN 202410205525**

(71) Applicant: **Huawei Technologies Co., Ltd.
Shenzhen, Guangdong 518129 (CN)**

(72) Inventors:
• **NIHEI, Yasuhide
Shenzhen, Guangdong 518129 (CN)**
• **MATSUI, Takumi
Shenzhen, Guangdong 518129 (CN)**

• **ZHOU, Shaopan
Shenzhen, Guangdong 518129 (CN)**
• **KENICHI, Kamada
Shenzhen, Guangdong 518129 (CN)**
• **KUO, Li-Te
Shenzhen, Guangdong 518129 (CN)**
• **DING, Ruiming
Shenzhen, Guangdong 518129 (CN)**
• **ZHANG, Kaiyuan
Shenzhen, Guangdong 518129 (CN)**
• **ZHANG, Yi
Shenzhen, Guangdong 518129 (CN)**
• **ZHANG, Jiali
Shenzhen, Guangdong 518129 (CN)**

(74) Representative: **Körber, Martin Hans
Mitscherlich PartmbB
Karlstraße 7
80333 München (DE)**

(54) **OPTICAL LENS, CAMERA MODULE AND ELECTRONIC DEVICE**

(57)     Provided are an optical camera lens (1), a camera module (30), and an electronic device (100). The optical camera lens (1) includes a first optical element (G1) and a second optical element (G2), the second optical element (G2) is positioned on an image side of the first optical element (G1), the first optical element (G1) includes at least one lens, and the second optical element (G2) includes a first surface (31), a second surface (32), and a third surface (33) that are connected to each other. After passing through the first optical element (G1), an external light beam is incident into the second optical element (G2) through the first surface (31), is reflected by the second surface (32), then is reflected by the third surface (33), and is emitted out of the second optical element (G2) through the second surface (32). A structure of the second optical element (G2) is designed to reduce a height of the second optical element (G2), allowing for a lower height of the optical camera lens (1). When the optical camera lens (1) is used in the camera module (30), it helps reduce the height of the camera module (30).

FIG. 4A

EP 4 730 009 A1

**Description**

This application claims priorities to Chinese Patent Application No. 202410177143.3, filed with the China National Intellectual Property Administration on February 8, 2024 and entitled "OPTICAL CAMERA LENS, CAMERA MODULE, AND ELECTRONIC DEVICE", and to Chinese Patent Application No. 202410205525.2, filed with the China National Intellectual Property Administration on February 23, 2024 and entitled "OPTICAL CAMERA LENS, CAMERA MODULE, AND ELECTRONIC DEVICE", both of which are incorporated herein by reference in their entireties.

**TECHNICAL FIELD**

This application relates to the field of photographing devices, and specifically, to an optical camera lens, a camera module, and an electronic device.

**BACKGROUND**

In recent years, with development of science and technology, a photographing requirement for a mobile phone is increasingly high. For example, requirements for a mobile phone lens such as more photographing focal lengths, higher resolution, and higher imaging quality impose a higher design requirement for the mobile phone lens. However, due to a size limitation of the mobile phone, how to achieve high imaging quality in mobile phone lens while reducing a height size of the mobile phone lens is an important issue.

**SUMMARY**

An objective of embodiments of this application is to provide an optical camera lens, a camera module, and an electronic device. The optical camera lens provided in embodiments of this application has a relatively small size.

According to a first aspect, an embodiment of this application provides an optical camera lens. A camera module includes the optical camera lens, and an electronic device includes the camera module. The optical camera lens includes a first optical element and a second optical element, the second optical element is positioned on an image side of the first optical element, the first optical element includes at least one lens, and the second optical element includes a first surface, a second surface, and a third surface that are connected to each other. The first surface faces the first optical element, a first included angle $\alpha$ exists between the first surface and the second surface, a second included angle $\beta$ exists between the third surface and the second surface, a sum of the first included angle $\alpha$ and the second included angle $\beta$ is not equal to 90°, and the second included angle $\beta$ is less than 45°. After passing through the first optical element, an external light beam is incident into the second optical element through the first surface, is reflected by the second surface, then is reflected by the third surface, and is emitted out of the second optical element through the second surface.

It may be understood that, in the electronic device, a thickness direction of the electronic device may be perpendicular to an optical axis direction of the first optical element. A thickness of the electronic device usually needs to be designed to be relatively small, and space in the thickness of the electronic device is limited. Therefore, a thickness size of the optical camera lens needs to be relatively small.

For example, a height direction of the optical camera lens is parallel to a first direction, and a length direction of the optical camera lens is parallel to a second direction. The optical camera lens may further have a third direction, and a width direction of the optical camera lens is parallel to the third direction. As defined, the first direction is perpendicular to an optical axis of the first optical element, and is parallel to a plane on which a normal direction of the first surface and a normal direction of the second surface are positioned. That is, the first direction is parallel to the thickness direction of the electronic device. The second direction is parallel to the optical axis of the first optical element, that is, the second direction is parallel to a length direction of the electronic device.

The second optical element is disposed so that the second optical element reflects light twice, so that a path of the light is folded, and the optical camera lens has a relatively short physical length. Therefore, a size of the optical camera lens in the second direction can be shortened, achieving a miniaturized design of the optical camera lens.

In addition, a structure of the second optical element is designed to reduce a height of the second optical element, allowing for a lower height of the optical camera lens. When the optical camera lens is used in the camera module, it helps reduce a height of the camera module.

In addition, because of a structure arrangement of the second optical element, the first surface and the second surface have an included angle, and light is incident into the second optical element through the first surface and is emitted out of the second optical element through the second surface, the second surface generally has an included angle with the optical axis direction (the first direction) of the first optical element. Therefore, the second surface is subject to a relatively small size limitation in a direction (the second direction) perpendicular to the optical axis of the first optical element, and an area of the second surface may be set to be relatively large. In this way, a photosensitive element that matches the second surface and has a relatively large photosensitive area can be selected, so that when an overall size of the optical camera lens is limited, a large target surface of the camera module is designed, and an imaging capability of the camera module is improved.

In some implementations, a sum of the first included angle $\alpha$ and the second included angle $\beta$ is less than 90°.

In this implementation, because the second included angle $\beta$ is less than 45°, most of an area of the first surface can be effectively used for incident light, an upper region of the second surface is mainly used to reflect light, a lower region of the second surface is mainly used to transmit light, and utilization of the second surface is relatively high. Therefore, a height of the first surface in the first direction may be set to be relatively small, so that the height of the first optical element is set to be relatively small synchronously, thereby helping reduce an overall height of the optical camera lens, and facilitating thinning of the camera module.

In addition, when the height of the first surface is relatively low, a side edge of the third surface close to the first optical element is higher than a side edge of the third surface away from the first optical element. This is equivalent to that the side edge of the third surface close to the first optical element is raised upward, so that a reflection point of light on the third surface is closer to the first surface, thereby helping reduce a length of the second optical element in the second direction.

In some implementations, the first included angle $\alpha$ and the second included angle $\beta$ meet $|\alpha - 2 \times \beta| \leq 10°$ or $|\alpha - 2 \times \beta| = 0°$.

In this implementation, an angle between an optical axis of a light beam emitted out of the second surface and the second surface is nearly perpendicular, which helps reduce aberration and facilitates imaging of scene light.

In some implementations, in some implementations, the first included angle $\alpha$ and the second included angle $\beta$ meet: $|\alpha - 2 \times \beta| = 0°$.

In this implementation, an optical axis of a light beam is emitted at an angle perpendicular to the second surface, an optical path is relatively simple, and an imaging effect of scene light on the photosensitive element is relatively good.

In some implementations, a refractive index of the second optical element is greater than $(1/\sin\alpha)$.

In this implementation, light incident into the second optical element is totally reflected by the second surface, reflection efficiency of the second surface is high, and when the light is reflected by the second surface, the light is not transmitted to be incident into the photosensitive element. Therefore, imaging of the photosensitive element is not affected, facilitating disposing of a photosensitive element with a larger area. In addition, the second surface does not affect that the light is reflected by the third surface and then transmitted by the second surface, so that manufacturing of the second optical element is simpler and costs are lower.

In some implementations, the first surface has an optical center point, the first surface and the second surface have a first intersection point, the second surface and the third surface have a second intersection point, and a distance s1 from the first intersection point to the optical center point in the first direction and a distance s2 from the second intersection point to the optical center point in the first direction meet s2 > s1.

For example, the distance s1 from the first intersection point to the optical center point in the first direction and the distance s2 from the second intersection point to the optical center point in the first direction meet 1 < (s2/s1) < 3.

In this implementation, an optical axis of incident light on the first surface may be disposed at a position closer to the first intersection point, and the light is reflected for the first time mainly by using a partial structure on an upper side of the second optical element, and is reflected for the second time by using a partial structure on a lower side of the second optical element, so that both the upper part and the lower part of the second optical element are fully utilized. In addition, angles of the first included angle $\alpha$ and the second included angle $\beta$ of the second optical element are properly set, so that an optical axis of a light beam can be close to the center point of the second optical element in the first direction, thereby improving utilization of the first surface.

In some implementations, a relationship between a width w of the second optical element in the second direction and a height h1 of the second optical element in the first direction meets 1 < (w/h1) < 1.75.

In this implementation, the width of the second optical element in the second direction is greater than the height h1 of the second optical element in the first direction. This helps to make the second surface have a larger area, thereby facilitating disposing of a photosensitive element with a larger area. In addition, a ratio of the width w to the height h1 is properly set, so that the second optical element has a smaller height h1 and a smaller width w, and the camera module has a smaller height and a smaller TTL.

In some implementations, the optical camera lens has a maximum image circle diameter mic, and a height h2 of the first surface in the first direction and the maximum image circle diameter mic meet 1.5 < (mic/h2) < 3.5.

In this implementation, an image circle diameter of the optical camera lens may be designed to be relatively large. Therefore, the photosensitive element may also be designed to be relatively large, so that the camera module has a stronger imaging capability.

In some implementations, one or more of the first surface, the second surface, and the third surface are curved surfaces having a focal power.

In this implementation, a surface having a focal power in the first surface, the second surface, and the third surface may be used to equalize aberration, which helps improve imaging quality of the camera module.

In some implementations, the third surface is fastened to a reflective film.

In this implementation, the reflective film may be a metal film or a dielectric film, and the reflective film can improve reflection efficiency of the third surface.

In some implementations, the optical camera lens further includes a third optical element. The third optical element is positioned on an object side of the first optical element. The third optical element is configured to change a propagation direction of an optical axis from the first direction to the second direction, the first direction is perpendicular to the optical axis of the first optical element, and is parallel to the plane on which the normal direction of the first surface and the normal direction of the second surface are positioned, and the second direction is parallel to the optical axis of the first optical element.

In this implementation, the third optical element may change a propagation direction of incident light of the optical camera lens, so as to facilitate flexible arrangement of the optical camera lens. When the optical camera lens has a relatively long focal length, the optical camera lens can be used in a relatively thin electronic device.

In some implementations, the third optical element includes at least one prism or reflector.

In this implementation, a prism or a reflector is used to reflect light, so as to change a propagation direction of the light.

In some implementations, the second optical element is disposed so that in an image stabilization process of the optical camera lens, the third optical element rotates along an axis perpendicular to a plane on which the first direction and the second direction are positioned, and/or the second optical element rotates along an axis parallel to the first direction.

In this implementation, by moving the third optical element, light is relatively stable in the optical camera lens, thereby reducing imaging jitter and improving imaging quality of the optical camera lens.

In some implementations, the second optical element is disposed so that at least one lens of an optical focusing element moves along the first direction in a focusing process of the optical camera lens.

In this implementation, focusing of the optical camera lens is implemented by moving at least one lens in the first optical element, and zooming can be implemented without a need to mount a plurality of optical camera lenses in the electronic device, thereby reducing space occupied by the optical camera lens and reducing costs.

According to a second aspect, an embodiment of this application provides a camera module. The camera module includes a photosensitive element and the optical camera lens according to any one of the foregoing embodiments, and the photosensitive element is positioned on an image side of the optical camera lens.

In this embodiment, because of a structure arrangement of a second optical element, a second surface has an included angle with a first direction. Therefore, the second surface is subject to a relatively small size limitation in the first direction, and an area of the second surface may be set to be relatively large. In this way, a photosensitive element that matches the second surface and has a relatively large photosensitive area can be selected, so that when an overall size of the optical camera lens is limited, a large target surface of the camera module is designed, and an imaging capability of the camera module is improved.

In some implementations, the first surface is perpendicular to a second direction, and the photosensitive element is perpendicular to a center line of a light beam emitted out of the first optical element.

In this implementation, because the second surface is disposed in an inclined manner, the photosensitive element is subject to a relatively small height limitation of the camera module, and mounting space of the photosensitive element is relatively large, which facilitates flexible disposing of the photosensitive element. In this embodiment, positions of the second optical element and the photosensitive element are set, so that imaging of scene light on the photosensitive element can be facilitated, thereby helping reduce aberration and improve an imaging effect.

In some implementations, the photosensitive element is disposed so that in a focusing process of the camera module, the photosensitive element moves along a direction parallel to a photosensitive center line of the photosensitive element.

In this implementation, by moving the photosensitive element, the photosensitive element may be directly aligned with a focal plane of the optical camera lens, thereby implementing precise focusing.

In some implementations, in an image stabilization process of the camera module, the photosensitive element rotates around an axis parallel to the optical axis of the photosensitive element, and/or the photosensitive element moves along a plane perpendicular to the optical axis of the photosensitive element.

In this implementation, by moving the photosensitive element, light incident into the photosensitive element is kept stable relative to the photosensitive element, thereby reducing imaging jitter and improving imaging quality of the camera module.

According to a third aspect, an embodiment of this application provides an electronic device. The electronic device includes an image processor and the camera module according to any one of the foregoing embodiments. The image processor is communicatively connected to the camera module, and the image processor is configured to obtain image data from the camera module, and process the image data.

In this embodiment, the electronic device has a relatively strong photographing capability and can have a relatively thin size.

## BRIEF DESCRIPTION OF DRAWINGS

To describe the technical solutions in embodiments of this application or in the background, the following briefly describes the accompanying drawings for describing embodiments of this application or the background.

FIG. 1 is a diagram of a structure of an electronic device in some embodiments according to an embodiment of this application;
FIG. 2 is a diagram of a partial exploded structure of the electronic device shown in FIG. 1;
FIG. 3 is a brief diagram of a structure of a camera module shown in FIG. 1;
FIG. 4A is a diagram of a structure of the camera module shown in FIG. 3 in some embodiments;
FIG. 4B is a diagram of a structure of the camera module shown in FIG. 3 in some other embodiments;
FIG. 5 is a diagram of a structure of a second optical element shown in FIG. 4A in some embodiments;
FIG. 6 is a diagram of a structure of the second optical element shown in FIG. 4A in some other embodiments;
FIG. 7 is a diagram of focusing of the camera module shown in FIG. 4A;
FIG. 8 is a diagram of image stabilization of the camera module shown in FIG. 4A;
FIG. 9 is a diagram of a structure of the camera module shown in FIG. 3 in some other embodiments;
FIG. 10 is a diagram of a structure of the camera module shown in FIG. 4A in some embodiments;
FIG. 11 is another diagram of a structure of the camera module shown in FIG. 10 in some embodiments;
FIG. 12 is a simulated axial aberration diagram of the camera module shown in FIG. 10 in a possible embodiment;
FIG. 13 is a simulated transverse chromatic aberration diagram of the camera module shown in FIG. 10 in a possible embodiment;
FIG. 14 is a simulated optical distortion diagram of the camera module shown in FIG. 10 in a possible embodiment;
FIG. 15 is a diagram of a structure of the camera module shown in FIG. 4A in some other embodiments;
FIG. 16 is a simulated axial aberration diagram of the camera module shown in FIG. 15 in a possible embodiment;
FIG. 17 is a simulated transverse chromatic aberration diagram of the camera module shown in FIG. 15 in a possible embodiment;
FIG. 18 is a simulated optical distortion diagram of the camera module shown in FIG. 15 in a possible embodiment;
FIG. 19 is a diagram of a structure of the camera module shown in FIG. 4A in still some other embodiments;
FIG. 20 is a simulated axial aberration diagram of the camera module shown in FIG. 19 in a possible embodiment;
FIG. 21 is a simulated transverse chromatic aberration diagram of the camera module shown in FIG. 19 in a possible embodiment; and
FIG. 22 is a simulated optical distortion diagram of the camera module shown in FIG. 19 in a possible embodiment.

## DESCRIPTION OF EMBODIMENTS

For ease of understanding, the following first explains and describes English abbreviations and related technical terms used in embodiments of this application.
A focal power (focal power) is equal to a difference between convergence of an image light beam and convergence of an object light beam, and represents a capability of an optical system to refract light.
For a lens or a lens group with a positive focal power, the lens or lens group has a positive focal length, and has an effect of converging light.
For a lens or a lens group with a negative focal power, the lens or lens group has a negative focal length, and has an effect of diverging light.
A focal length (focal length) is also referred to as a focal length and is a measurement of how strongly the optical system converges or diverges light, and is a vertical distance from an optical center of the lens or the lens group to the focal plane when a clear image of an infinite scene is formed on a focal plane by using a lens or a lens group. From a practical perspective, the focal length may be understood as a distance from a center of a camera lens to a plane when an object is at an infinite distance. For a prime lens, a position of an optical center of the prime lens is fixed. For a long-focus lens, a change in an optical center of a camera lens causes a change in a focal length of the camera lens.
For an object side surface, with a lens as a boundary, a side on which a shot object is positioned is an object side, and a surface of the lens close to the object side is referred to as the object side surface.
For an image side surface, with a lens as a boundary, a side on which an image of a shot object is positioned is an image side, and a surface of the lens close to the image side is referred to as the image side surface.
An aperture diaphragm (aperture diaphragm) is an apparatus used to control an amount of light reaching a photosensitive surface after light passes through a camera lens, and is usually positioned in the camera lens.
An F-number, also referred to as an F-stop (Fno), is a relative value (a reciprocal of a relative aperture) obtained by dividing a focal length of a camera lens by an entrance pupil diameter of the camera lens. When the F-number is smaller, an amount of admitted light in a same unit time is larger. When the F-number is larger, a depth of field is smaller, and shot background content is blurred, similar to an effect of a long-focus lens.

A total track length (total track length, TTL) is a total length from a surface of a camera lens closest to an object side to an imaging plane. TTL is a main factor that forms a camera height.

An imaging plane is a carrier plane that is positioned on image sides of all lenses in a long-focus lens and on which an image is formed after light sequentially passes through the lenses in the long-focus lens.

An optical axis is an axis perpendicularly passing through a center of a lens, also referred to as a center line of a light beam (light column), or a symmetry axis of an optical system. An optical axis of a camera lens is an axis that passes through centers of lenses of the camera lens. When light parallel to the optical axis is incident into a convex lens, a desirable convex lens converges all light at one point behind the lens. This point at which all the light converges is a focal point.

A focal point is a point at which parallel light converges after being refracted by a lens or a lens group.

An image focal plane, also referred to as a rear focal plane or a second focal plane, is a flat surface that passes through an image focal point (also referred to as a rear focal point or a second focal point) and that is perpendicular to an optical axis of a system.

An Abbe number (Abbe), in other words, a dispersion coefficient, is a difference ratio of refractive indices of an optical material at different wavelengths, and represents a degree of dispersion of the material.

Field of view (field of view, FOV): In an optical instrument, using a lens of the optical instrument as a vertex, an included angle formed by two edges of a maximum range within which a target object can be observed through the lens is referred to as the field of view. A size of the field of view determines a range of vision of the optical instrument. The larger the field of view, the broader the vision, and the smaller the optical magnification.

A semi-sensor diagonal ImgH (Image Height) represents a half of a diagonal length of an effective pixel region on a photosensitive chip, namely, an image height of an imaging plane.

A maximum image circle diameter (Max Image Circle, MIC) is a diameter of a maximum-diameter circle imaged by an optical system, and depends on or relies on a size of a sensor used cooperatively.

Aberration: A paraxial region of an optical system has the properties of a desirable optical system. Paraxial light emitted out of a point on an object intersects an image plane at one point (namely, a paraxial image point). However, light actually passing through different apertures of a camera lens can hardly perfectly intersect at one point. Instead, there are deviations from the position of the paraxial image point. These deviations are collectively referred to as aberration.

An axial chromatic aberration (longitudinal spherical aber) is also referred to as longitudinal chromatic aberration or positional chromatic aberration or axial aberration. A light beam parallel to an optical axis converges at different positions after passing through a camera lens. This aberration is referred to as positional chromatic aberration or axial chromatic aberration. This is because positions of images formed by the camera lens for light of different wavelengths are different, so that image focal planes of light of different colors cannot overlap during final imaging, and polychromatic light is scattered to form dispersion.

Distortion (distortion) is a degree at which an image formed by an optical system for an object is distorted relative to the object. Distortion is caused because a height of a point at which chief light with different fields of view intersects a Gaussian image plane after the chief light passes through the optical system is not equal to a desirable image height due to impact of a diaphragm spherical aberration, and a difference between the two heights is distortion. Therefore, distortion only changes an imaging position of an off-axis object point on a desirable plane, so that a shape of an image is distorted, but definition of the image is not affected.

Astigmatism (astigmatism): Because an object point is not on an optical axis of an optical system, a light beam emitted by the object point has an oblique angle to the optical axis. After the light beam is refracted by a lens, convergence points of a meridian pencil and a sagittal pencil are not a same point. That is, the light beam cannot be focused at one point, and imaging is not clear, resulting in astigmatism. The meridian pencil and the sagittal pencil are names of light beams in two vertical planes in a rotationally symmetrical optical system.

A meridian plane (meridian plane) is a flat surface formed by chief light (main light beam) of an object point outside an optical axis and the optical axis.

A sagittal plane (sagittal plane) is a flat surface that passes through the chief light (main light beam) of the object point outside the optical axis and that is perpendicular to the meridian plane.

A curvature of field (curvature of field) is used for indicating a difference in an optical axis direction between a position of the clearest image point in non-central field of view light passing through an optical camera lens group and a position of the clearest image point in a central field of view. When a lens has a curvature of field, an intersection point of an entire light beam does not coincide with a desirable image point. Although a clear image point can be obtained at each specific point, an entire image plane is a curved surface.

Optical image stabilization (Optical Image Stabilization, OIS): A structure and motion of a special lens or photosensitive element minimize image instability caused by jitter during use by an operator.

Automatic focusing (Auto Focus, AF) is a manner of using a principle of light reflection of an object, in which reflected light is received by a sensor on a camera (module) and processed by a computer, to drive an electric focusing apparatus to focus.

The following describes embodiments of this application with reference to the accompanying drawings in embodiments of this application.

In the descriptions of embodiments of this application, it should be noted that terms "mounting" and "connection" should be understood in a broad sense unless there is a clear stipulation and limitation. For example, "connection" may be a detachable connection, a nondetachable connection, a direct connection, or an indirect connection through an intermediate medium. "A plurality of" means at least two.

Orientation terms mentioned in embodiments of this application, for example, "upper", "lower", "inner", "outer", "top", "bottom", and "side" are merely directions based on the accompanying drawings. Therefore, the orientation terms are used to better and more clearly describe and understand embodiments of this application, instead of indicating or implying that a specified apparatus or element should have a specific orientation, and be constructed and operated in the specific orientation. Therefore, this cannot be understood as a limitation on embodiments of this application.

In embodiments of this application, a limitation on a relative position relationship is mentioned, for example, parallel, perpendicular, or aligned. These limitations are all defined based on a current technique level, but are not absolutely strict limitations. A small deviation is allowed, and being approximately parallel, approximately perpendicular, approximately aligned, or the like is allowed. For example, that A is parallel to B means that A is parallel or approximately parallel to B, and an included angle of 0 degrees to 10 degrees between A and B is allowed. For example, that A is perpendicular to B means that A is perpendicular or approximately perpendicular to B, and an included angle of 80 degrees to 100 degrees between A and B is allowed.

In embodiments of this application, the terms "first", "second", "third", and "fourth" are merely intended for a purpose of description, and shall not be understood as an indication or implication of relative importance or an implicit indication of a quantity of indicated technical features. Therefore, a feature defined by "first", "second", "third", or "fourth" may explicitly or implicitly include one or more features.

Embodiments of this application provide an optical camera lens, a camera module including the optical camera lens, and an electronic device including the camera module. The optical camera lens includes a first optical element and a second optical element, the second optical element is positioned on an image side of the first optical element, the first optical element includes at least one lens, and the second optical element includes a first surface, a second surface, and a third surface that are connected to each other. The first surface faces the first optical element, a first included angle $\alpha$ exists between the first surface and the second surface, a second included angle $\beta$ exists between the third surface and the second surface, a sum of the first included angle $\alpha$ and the second included angle $\beta$ is not equal to 90°, and the second included angle $\beta$ is less than 45°. After passing through the first optical element, an external light beam is incident into the second optical element through the first surface, is reflected by the second surface, then is reflected by the third surface, and is emitted out of the second optical element through the second surface.

In this case, the second optical element folds a path of the light, so that the optical camera lens has a relatively short physical length. Therefore, a size of the optical camera lens in the second direction can be shortened, achieving a miniaturized design of the optical camera lens. In addition, a height of the optical camera lens can be designed to be relatively low, thereby helping reduce a height of the camera module when the optical camera lens is used in the camera module. In addition, a design of a large target surface of the camera module can be implemented, so that an imaging capability of the camera module is improved.

The electronic device may be a device that has a photographing or video shooting function, such as a mobile phone, a tablet computer, a laptop computer, a camera, or a wearable device. The wearable device may be a device such as a band, a watch, or glasses. The electronic device may be configured to shoot and record an image, and a lens of the electronic device may perform photographing at different object distances.

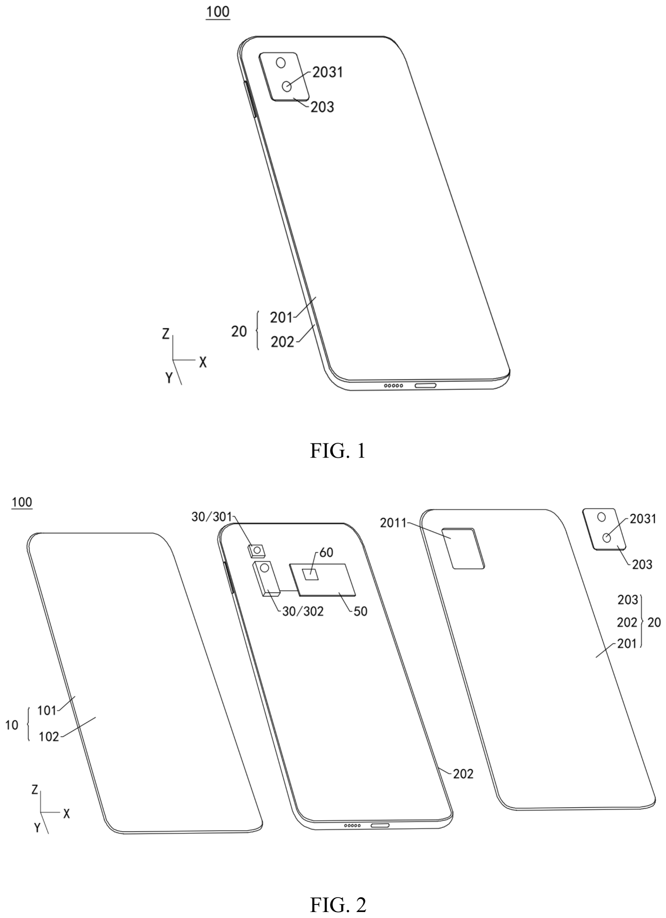

FIG. 1 is a diagram of a structure of an electronic device 100 in some embodiments according to an embodiment of this application. FIG. 2 is a diagram of a partial exploded structure of the electronic device 100 shown in FIG. 1. An example in which the electronic device 100 is a mobile phone is used for description in embodiments. It may be understood that FIG. 1 and FIG. 2 merely schematically show some components included in the electronic device 100. Actual shapes, actual sizes, actual positions, and actual structures of these components are not limited by FIG. 1 and FIG. 2. The electronic device 100 may alternatively include more or fewer components than those shown in FIG. 1 and FIG. 2.

In some embodiments, the electronic device 100 may include a screen 10, a housing 20, and a camera module 30. The screen 10 is configured to display an image, a video, or the like. The screen 10 includes a transparent cover 101 and a display 102. The transparent cover 101 and the display 102 are stacked and fastened. The transparent cover 101 is mainly configured to protect the display 102 and prevent dust from entering the display 102. A material of the transparent cover 101 includes but is not limited to glass. The display 102 may be a flexible display or a rigid display. For example, the display 102 may be an organic light-emitting diode (organic light-emitting diode, OLED) display, an active-matrix organic light-emitting diode (active-matrix organic light-emitting diode, AMOLED) display, a mini light-emitting diode (mini light-emitting diode) display, a micro light-emitting diode (micro light-emitting diode) display, a micro organic light-emitting diode (micro organic light-emitting diode) display, a quantum dot light-emitting diode (quantum dot light-emitting diode, QLED) display, a liquid crystal display (liquid crystal display, LCD), or the like.

For example, the housing 20 is configured to protect an internal electronic component of the electronic device 100. The housing 20 includes a rear cover 201, a bezel 202, and a camera decorative cover 203. The rear cover 201 is positioned on a side that is of the display 102 and that is away from the transparent cover 101, and is stacked with the transparent cover 101 and the display 102. The bezel 202 is fastened to the rear cover 201. For example, the bezel 202 may be fastened to the rear cover 201 by using an adhesive. Alternatively, the bezel 202 and the rear cover 201 may be of an integrated structure. In other words, the bezel 202 and the rear cover 201 are of an integrated structure. The bezel 202 is positioned between the rear cover 201 and the transparent cover 101. The transparent cover 101 may be fastened to the bezel 202 by using an adhesive. The transparent cover 101, the rear cover 201, and the bezel 202 enclose internal accommodation space of the electronic device 100. The internal accommodation space accommodates the display 102 inside.

For example, the camera module 30 is configured to capture a photo/video. For example, the camera module 30 may be positioned in the internal accommodation space of the electronic device 100. There may be one or more camera modules 30. For example, two camera modules 30 are used for illustration in embodiments. The camera module 30 may be used as a rear-facing camera module 30, or may be used as a front-facing camera module 30.

For example, a light incident surface of the camera module 30 faces the rear cover 201. A mounting opening 2011 is disposed on the rear cover 201, and the camera decorative cover 203 covers and is fastened to the mounting opening 2011. The camera decorative cover 203 is configured to protect the camera module 30. In some embodiments, the camera decorative cover 203 protrudes to a side that is of the rear cover 201 and that is away from the transparent cover 101. In this way, the camera decorative cover 203 can expand mounting space of the camera module 30 in a thickness direction of the electronic device 100. In some other embodiments, the camera decorative cover 203 may alternatively be flush with the rear cover 201 or concave to the internal accommodation space of the electronic device 100.

For example, a transparent window 2031 may be disposed on the camera decorative cover 203. The transparent window 2031 allows scene light to be incident into the light incident surface of the camera module 30. In other words, light is incident into the camera module 30 through the rear cover 201.

In this embodiment, the camera module 30 is used as a rear-facing camera module 30 of the electronic device 100. For example, the two camera modules 30 may be a camera module 301 and a camera module 302. The camera module 301 may be used as a rear-facing primary camera module 30, and the camera module 302 may be used as a rear-facing long-focus camera module 30. In another embodiment, the electronic device 100 may further include another camera module 30, used as a rear-facing wide-angle camera module 30.

In another embodiment, the light incident surface of the camera module 30 faces the transparent cover 101. An optical path avoidance hole is disposed on the display 102. The optical path avoidance hole allows the scene light to pass through the transparent cover 101 and then enter the light incident surface of the camera module 30. In this way, the camera module 30 is used as a front-facing camera module 30 of the electronic device 100.

In some embodiments, as shown in FIG. 2, the electronic device 100 further includes a circuit board 50 and an image processor 60. The circuit board 50 and the image processor 60 are positioned in the internal accommodation space of the electronic device 100. The image processor 60 is fastened to the circuit board 50 and is electrically connected to the circuit board 50. The image processor 60 is communicatively connected to the camera module 30. The image processor 60 is configured to: obtain image data from the camera module 30, and process the image data. The communication connection between the camera module 30 and the image processor 60 may include an electrical connection like a cable connection for performing data transmission, or may include coupling or the like for implementing data transmission. It may be understood that the communication connection between the camera module 30 and the image processor 60 may alternatively be implemented in another manner in which data transmission can be implemented.

In some embodiments, the electronic device 100 may further include an analog-to-digital converter (also referred to as an A/D converter, not shown in the figure). The analog-to-digital converter is connected between the camera module 30 and the image processor 60. The analog-to-digital converter is configured to convert a signal generated by the camera module 30 into a digital image signal and transmit the digital image signal to the image processor 60, then the image processor 60 processes the digital image signal, and finally, the screen 10 displays an image or a video.

In some embodiments, the electronic device 100 may further include a memory (not shown in the figure). The memory is communicatively connected to the image processor 60. The image processor 60 processes the digital image signal, and then transmits the image to the memory. In this way, when the image needs to be viewed subsequently, the image can be found from the memory at any time and displayed on the screen 10. In some embodiments, the image processor 60 further compresses a processed digital image signal, and then stores a compressed digital image signal in the memory, to save memory space.

In another embodiment, the electronic device 100 may not include the screen 10 and/or the camera decorative cover 203.

The electronic device 100 may have a width direction X, a length direction Y, and a thickness direction Z. The length direction Y is perpendicular to the width direction X, and the thickness direction Z is perpendicular to the width direction X and the length direction Y. The display 102 and the housing 20 may be arranged opposite to each other in the thickness direction Z of the electronic device 100. In this case, the housing 20 may be perpendicular to the thickness direction Z of the electronic device 100.

It may be understood that a mounting position of the camera module 30 of the electronic device 100 in embodiments shown in FIG. 1 and FIG. 2 is merely an example. The mounting position of the camera module 30 is not strictly limited in this application. In some other embodiments, the camera module 30 may alternatively be mounted at another position of the electronic device 100. For example, the camera module 30 may be mounted in the upper middle or the upper right corner of the back of the electronic device 100. In some other embodiments, the electronic device 100 may include a terminal body and an auxiliary component that can rotate, move, or disassemble relative to the terminal body, and the camera module 30 may alternatively be disposed on the auxiliary component.

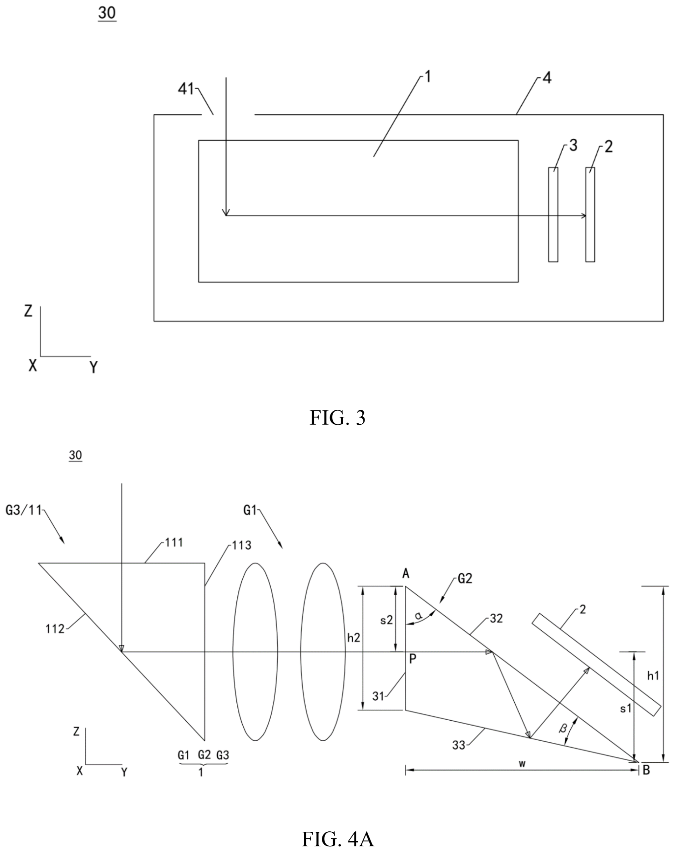

Refer to FIG. 2 and FIG. 3. FIG. 3 is a brief diagram of a structure of the camera module 30 shown in FIG. 1.

In some embodiments, the camera module 30 may include an optical camera lens 1 and a photosensitive element 2, and the photosensitive element 2 is positioned on an image side of the optical camera lens 1.

The photosensitive element 2 (also referred to as an image sensor) is a semiconductor chip, includes hundreds of thousands to millions of photodiodes on a surface, and generates charges when being irradiated by light.

The photosensitive element 2 converts, by using an optical-to-electrical conversion function of a photoelectric device, an optical image on a photosensitive surface of the photosensitive element 2 into an electrical signal in a corresponding proportion to the optical image. The photosensitive surface of the photosensitive element 2 is disposed facing the optical camera lens 1. The photosensitive element 2 may be a charge coupled device (charge coupled device, CCD), or may be a complementary metal-oxide semiconductor device (complementary metal-oxide semiconductor, CMOS), a phototransistor, a thin film transistor, or the like. The charge coupled device is made of a highly photosensitive semiconductor material, and can convert light into electric charges. The charge coupled device is constituted by many photosensitive units, usually in megapixels. When the surface of the charge coupled device is illuminated by light, each photosensitive unit reflects electric charges on a component. Signals generated by all photosensitive units are combined into a complete picture. The complementary metal-oxide semiconductor device is a semiconductor mainly made by using two elements: silicon and germanium, so that semiconductors of N (with negative electrons) and P (with positive electrons) levels coexist on the complementary metal-oxide semiconductor device. A current generated by these two complementary effects can be recorded and interpreted into an image by a processing chip.

The optical camera lens 1 performs imaging mainly by using a refraction principle of a lens. To be specific, scene lights pass through the optical camera lens 1 and form a clear image on a focal plane, and an image of a scene is recorded by using the photosensitive element 2 positioned on the focal plane. For example, the optical camera lens 1 may be a long-focus lens, and can better photograph a scene at a farther distance.

The optical camera lens 1 may be an upright lens or a periscope lens. In this embodiment, an example in which the optical camera lens 1 is a periscope lens is used for description. When the optical camera lens 1 is a periscope lens, the optical camera lens 1 can be better used in a thin electronic device.

In some embodiments, the camera module 30 may further include a light filter 3. The light filter 3 may be positioned between the optical camera lens 1 and the photosensitive element 2.

The light filter 3 is configured to: filter out an undesired band in the light, and prevent the photosensitive element 2 from generating false colors or ripples, to improve effective resolution and color reproduction of the photosensitive element 2. For example, the light filter 3 may be an infrared light filter 3. In this embodiment, the light filter 3 is an independent component. In some other embodiments, a structural member of the light filter 3 may be removed, and instead, surface processing or material processing is performed on at least one optical element of the long-focus lens, to implement light filtering. A specific embodiment of a structural member or a structure configured to implement light filtering is not strictly limited in this application.

In some embodiments, the camera module 30 may further include a housing 4. The photosensitive element 2, the optical camera lens 1, and the like may be mounted in internal space of the housing 4. The housing 4 may be provided with a transparent port 41, and the transparent port 41 is configured to transmit light, so that external scene light enters the optical camera lens 1.

In this embodiment, an external light beam can pass through the optical camera lens 1 to irradiate the photosensitive surface of the photosensitive element 2. For example, a working principle of the camera module 30 is as follows: Light reflected by a photographed scene passes through the optical camera lens 1 and passes through the light filter 3, and then an optical image is generated and projected to the photosensitive surface of the photosensitive element 2. The photosensitive element 2 converts the optical image into an electrical signal (that is, an analog image signal) and transmits the electrical signal to an analog-to-digital converter, so as to convert the electrical signal into a digital image signal by using the analog-to-digital converter and send the digital image signal to the image processor 60 (refer to FIG. 2).

Refer to FIG. 3 and FIG. 4A. FIG. 4A is a diagram of a structure of the camera module 30 shown in FIG. 3 in some embodiments.

In some embodiments, an optical camera lens 1 includes a first optical element G1, a second optical element G2, and a third optical element G3. The third optical element G3 is positioned on an object side of the first optical element G1, and the second optical element G2 is positioned on an image side of the first optical element G1.

The third optical element G3 may include a direction changing element 11, configured to change a propagation direction of an optical axis from a first direction to a second direction. The first direction is perpendicular to an optical axis of the first optical element G1, and is parallel to a plane on which a normal direction of a first surface 31 and a normal direction of a second surface 32 are positioned, that is, the first direction is parallel to a thickness direction Z. The second direction is parallel to the optical axis of the first optical element G1, that is, the second direction is parallel to a length direction Y. After passing through the direction changing element 11, an optical axis of a light beam changes to the second direction, and then the light is incident into the first optical element G1 from the second direction.

For example, the optical camera lens 1 may have a width direction, a length direction, and a height direction. The length direction may be perpendicular to the width direction, and the height direction may be perpendicular to the width direction and the length direction. A height direction of the optical camera lens 1 is parallel to the first direction, and a length direction of the optical camera lens 1 is parallel to the second direction. The optical camera lens 1 may further have a third direction, and a width direction of the optical camera lens 1 is parallel to the third direction. When the camera module 30 is mounted in the electronic device, the height direction of the optical camera lens 1 is parallel to the thickness direction Z of the electronic device. The width direction of the optical camera lens 1 may be parallel to the width direction X of the electronic device, and the length direction of the optical camera lens 1 may be parallel to the length direction Y of the electronic device. Alternatively, the width direction of the optical camera lens 1 may be parallel to the length direction Y of the electronic device, and the length direction of the optical camera lens 1 may be parallel to the width direction X of the electronic device. In this case, the first direction may be parallel to the thickness direction Z of the electronic device, that is, the first direction is perpendicular to the rear cover 201 of the electronic device (refer to FIG. 2). The third optical element G3, the first optical element G1, and the second optical element G2 are arranged in a direction perpendicular to the first direction, and have larger arrangement space.

For example, the direction changing element 11 may be a prism. The direction changing element 11 may include an incident surface 111, a reflective surface 112, and an emergent surface 113. The incident surface 111, the reflective surface 112, and the emergent surface 113 may be connected in sequence, and normals of the incident surface 111, the reflective surface 112, and the emergent surface 113 may be coplanar. The incident surface 111 may be perpendicular to the first direction, the emergent surface 113 may be perpendicular to the second direction, and the reflective surface 112 may be perpendicular to an angular bisector of the first direction and the second direction, so that light is incident from the incident surface 111 into the direction changing element 11. After being reflected by the reflective surface 112, the light is emitted out of the direction changing element 11 through the emergent surface 113, and an optical axis direction of the light beam is changed from the first direction to the second direction.

The first optical element G1 may include at least one lens. The first optical element G1 is configured to focus light. The first optical element G1 may not change the direction of the optical axis, and the first optical element G1 may converge light, to implement focusing of the optical camera lens 1. When the first optical element G1 has a plurality of lenses, the plurality of lenses may form a lens group, in which there is at least one lens having a positive focal power. In addition, there may be a lens having a negative focal power. This is not strictly limited in this embodiment.

For example, the first optical element G1 may be disposed between the third optical element G3 and the second optical element G2, and the first optical element G1 can guide converged light to the second optical element G2, thereby shortening a distance between the second optical element G2 and the photosensitive element 2, and facilitating miniaturization of the camera module 30.

The second optical element G2 may be a prism. The second optical element G2 is configured to reflect light to fold an optical path.

For example, the second optical element G2 has a first surface 31, a second surface 32, and a third surface 33 that are connected to each other. The first surface 31 faces the first optical element G1, a first included angle $\alpha$ exists between the first surface 31 and the second surface 32, a second included angle $\beta$ exists between the third surface 33 and the second surface 32, a sum of the first included angle $\alpha$ and the second included angle $\beta$ is not equal to 90°, and the second included angle $\beta$ is less than 45°. Light emitted by the first optical element G1 is incident into the second optical element G2 through the first surface 31, is reflected by the second surface 32, then is reflected by the third surface 33, and is emitted out of the second optical element G2 through the second surface 32. For example, the first included angle $\alpha$ may be 35°, 45°, 55°, 65°, 75°, or the like. For example, the second included angle $\beta$ may be 17.5°, 22.5°, 27.5°, 32.5°, 38.5°, or the like.

In this case, the first surface 31 is configured to transmit light, so that the light enters the second optical element G2. The second surface 32 is configured to refract light, so that the light is folded for the first time in the second optical element G2. The second surface 32 is further configured to transmit light, so that the light is emitted out of the second optical element G2. The third surface 33 is configured to refract light, so that the light is folded for the second time in the second optical element G2. That is, light is incident into the second optical element G2 through the first surface 31, is incident into the second surface 32, so as to be reflected, then is incident into the third surface 33 to be reflected again, and finally is incident into the second surface 32 and emitted out of the second optical element G2.

In addition, because the second included angle β is less than 45°, the second optical element G2 has a relatively small size in the first direction. This helps make a height of the first surface 31 in the first direction have a relatively small size, so that the second optical element G2 has a relatively small size in the first direction, that is, the second optical element G2 has a relatively small height.

In some examples, normal directions of the first surface 31, the second surface 32, and the third surface 33 may be coplanar. The normal directions of the first surface 31, the second surface 32, and the third surface 33 may be further parallel to a plane formed by the first direction and the second direction. In some examples, the first surface 31 may be perpendicular to the second direction.

It may be understood that, in the electronic device, the thickness direction of the electronic device may be parallel to the first direction, the thickness of the electronic device usually needs to be designed to be relatively small, and space in the thickness of the electronic device is limited. Therefore, a size of the optical camera lens 1 in the first direction needs to be relatively small.

In this embodiment of this application, the third optical element G3 may change a propagation direction of incident light of the optical camera lens 1, so as to facilitate flexible arrangement of the optical camera lens 1. When the optical camera lens 1 has a relatively long focal length, the optical camera lens 1 can be used in a relatively thin electronic device. In this embodiment of this application, the second optical element G2 is disposed so that the second optical element G2 reflects light twice, so that a path of the light is folded, and the optical camera lens 1 has a relatively short physical length. Therefore, a size of the optical camera lens 1 in the second direction can be shortened, achieving a miniaturized design of the optical camera lens 1.

In addition, a structure of the second optical element G2 is designed to reduce a height of the second optical element G2, allowing for a lower height of the optical camera lens 1. When the optical camera lens 1 is used in the camera module 30, it helps reduce a height of the camera module 30.

In addition, because of a structure arrangement of the second optical element G2, the first surface 31 and the second surface 32 have an included angle, and light is incident into the second optical element G2 through the first surface 31 and is emitted out of the second optical element G2 through the second surface 32, the second surface 32 has an included angle with the first direction. Therefore, the second surface 32 is subject to a relatively small size limitation in the first direction, and an area of the second surface 32 may be set to be relatively large. In this way, a photosensitive element 2 that matches the second surface 32 and has a relatively large photosensitive area can be selected, so that when an overall size of the optical camera lens 1 is limited, a large target surface of the camera module 30 is designed, and an imaging capability of the camera module 30 is improved.

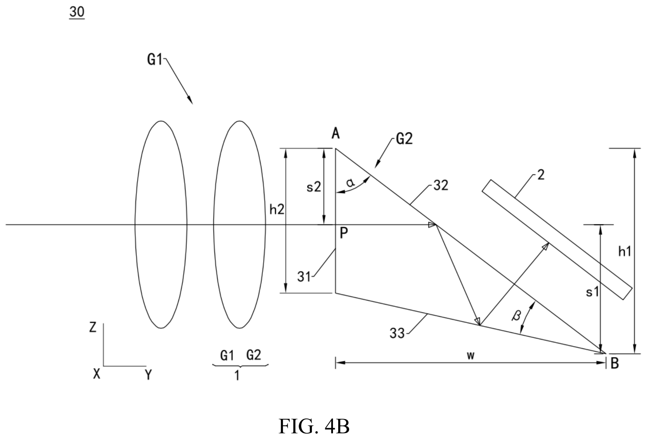

FIG. 4B is a diagram of a structure of the camera module 30 shown in FIG. 3 in some other embodiments.

In some other embodiments, the optical camera lens 1 may not include the third optical element G3, and the optical camera lens 1 may include the first optical element G1 and the second optical element G2.

For example, the optical camera lens 1 includes the first optical element G1 and the second optical element G2, the second optical element G2 is positioned on an image side of the first optical element G1, the first optical element G1 includes at least one lens, and the second optical element G2 includes a first surface 31, a second surface 32, and a third surface 33 that are connected to each other. The first surface 31 faces the first optical element G1, a first included angle α exists between the first surface 31 and the second surface 32, a second included angle β exists between the third surface 33 and the second surface 32, a sum of the first included angle α and the second included angle β is not equal to 90°, and the second included angle β is less than 45°. After passing through the first optical element G1, an external light beam is incident into the second optical element G2 through the first surface 31, is reflected by the second surface 32, then is reflected by the third surface 33, and is emitted out of the second optical element G2 through the second surface 32.

In this case, after passing through the first optical element G1, an external light beam is incident into the second optical element G2 through the first surface 31, is reflected by the second surface 32, then is reflected by the third surface 33, and is emitted out of the second optical element G2 through the second surface 32. In this case, the optical camera lens 1 may be a straight-through lens. For the first optical element G1 and the second optical element G2, refer to related descriptions of the embodiment in FIG. 4A. Details are not described in this embodiment again. In this embodiment, the second optical element G2 is disposed so that the second optical element G2 reflects light twice, so that a path of the light is folded, and the optical camera lens 1 has a relatively short physical length. Therefore, a size of the optical camera lens 1 in the second direction can be shortened, achieving a miniaturized design of the optical camera lens 1.

In addition, a structure of the second optical element G2 is designed to reduce a height of the second optical element G2, allowing for a lower height of the optical camera lens 1. When the optical camera lens 1 is used in the camera module 30, it helps reduce a height of the camera module 30.

In addition, because of a structure arrangement of the second optical element G2, the first surface 31 and the second surface 32 have an included angle, and light is incident into the second optical element G2 through the first surface 31 and is emitted out of the second optical element G2 through the second surface 32, the second surface 32 has an included angle with the first direction. Therefore, the second surface 32 is subject to a relatively small size limitation in the first direction, and an area of the second surface 32 may be set to be relatively large. In this way, a photosensitive element 2 that matches the second surface 32 and has a relatively large photosensitive area can be selected, so that when an overall size of the optical camera lens 1 is limited, a large target surface of the camera module 30 is designed, and an imaging capability of the camera module 30 is improved.

Still refer to FIG. 3 and FIG. 4A.

In some embodiments, the photosensitive element 2 may be disposed facing the second surface 32 of the second optical element G2, and is positioned on an image side of the second optical element G2. The photosensitive element 2 may be disposed in parallel to the second surface 32, or may have an included angle with the second surface 32, which is not specifically limited in this embodiment. A size of the photosensitive element 2 may be less than a size of the second surface 32, and the photosensitive element 2 may be closer to a bottom side of the second optical element G2. A top side of the second optical element G2 is close to a side of the housing 4 on which the transparent port 41 disposed, and a bottom side of the second optical element G2 may be away from the side of the housing 4 on which the transparent port 41 disposed.

In some embodiments, the first surface 31 may be perpendicular to the second direction. The photosensitive element 2 may be perpendicular to a center line of a light beam emitted out of the first optical element G1, that is, the photosensitive element 2 is perpendicular to an optical axis of emergent light from the first optical element G1. In this case, the third surface 33 of the second optical element G2 faces the side of the housing 4 on which the transparent port 41 is disposed. It is equivalent to that the photosensitive element 2 is disposed toward the second surface 32. Because the second surface 32 is disposed in an inclined manner, the photosensitive element 2 is subject to a relatively small height limitation of the camera module 30, and mounting space of the photosensitive element 2 is relatively large, which facilitates flexible disposing of the photosensitive element 2. In this embodiment, positions of the second optical element G2 and the photosensitive element 2 are set, so that imaging of scene light on the photosensitive element 2 can be facilitated, thereby helping reduce aberration and improve an imaging effect.

In some embodiments, a sum of the first included angle $\alpha$ and the second included angle $\beta$ may be less than 90°. It is equivalent to that an included angle between the first surface 31 and the third surface 33 is greater than 90°.

In this case, because the second included angle $\beta$ is less than 45°, most of an area of the first surface 31 can be effectively used for incident light, an upper region of the second surface 32 is mainly used to reflect light, a lower region of the second surface 32 is mainly used to transmit light, and utilization of the second surface 32 is relatively high. Therefore, a height of the first surface 31 in the first direction may be set to be relatively small, so that the height of the third optical element G3 and the height of the first optical element G1 are set to be relatively small synchronously, thereby helping reduce an overall height of the optical camera lens 1, and facilitating thinning of the camera module 30.

In addition, when the height of the first surface 31 is relatively low, a side edge of the third surface 33 close to the first optical element G1 is higher than a side edge of the third surface 33 away from the first optical element G1. This is equivalent to that the side edge of the third surface 33 close to the first optical element G1 is raised upward, so that a reflection point of light on the third surface 33 is closer to the first surface 31, thereby helping reduce a length of the second optical element G2 in the second direction.

For example, the first included angle $\alpha$ may be 55°, and the second included angle $\beta$ may be 27.5°. Then, the included angle between the first surface 31 and the third surface 33 is 97.5°. In this case, the second optical element G2 has both a relatively small height and a relatively small length, which helps reduce the height and the length of the optical camera lens 1, and can also synchronously reduce a TTL. In addition, the second surface 32 has a relatively long length and a relatively large area, which helps dispose a photosensitive element 2 with a relatively large area, so that performance of the camera module 30 is relatively good.

For example, the first included angle $\alpha$ may be 45°, and the second included angle $\beta$ may be 22.5°. Then, the included angle between the first surface 31 and the third surface 33 is 112.5°. In this case, the second optical element G2 has both a relatively small height and a relatively small length, which helps reduce the height and the length of the optical camera lens 1, and can also synchronously reduce a TTL. In addition, the second surface 32 has a relatively long length and a relatively large area, which helps dispose a photosensitive element 2 with a relatively large area, so that performance of the camera module 30 is relatively good.

Compared with disposing of a right-angle prism, in this embodiment, based on angle setting between surfaces of the second optical element G2, the second optical element G2 can have a relatively small height in the first direction and a relatively small length in the second direction. Therefore, the height and the TTL of the optical camera lens 1 are reduced, which is conducive to a miniaturized design of the optical camera lens 1 and a miniaturized design of the camera module 30.

In some embodiments, the first included angle $\alpha$ and the second included angle $\beta$ may meet $|\alpha - 2 \times \beta| \leq 10°$. In this case, an angle between an optical axis of a light beam emitted out of the second surface 32 and the second surface 32 is nearly perpendicular, which helps reduce aberration and facilitates imaging of scene light.

For example, the first included angle $\alpha$ and the second included angle $\beta$ meet $|\alpha - 2 \times \beta| = 0°$. In this case, an optical axis of a light beam is emitted at an angle perpendicular to the second surface 32, an optical path is relatively simple, and an imaging effect of scene light on the photosensitive element 2 is relatively good. In addition, the photosensitive element 2 may be parallel to the second surface 32, which facilitates positioning and mounting of the photosensitive element 2 in the camera module 30.

In some embodiments, a refractive index of the second optical element G2 may be greater than (1/sin$\alpha$). In this case, light incident into the second optical element G2 is totally reflected by the second surface 32, reflection efficiency of the second surface 32 is high, and when the light is reflected by the second surface 32, the light is not transmitted to be incident into the photosensitive element 2. Therefore, imaging of the photosensitive element 2 is not affected, facilitating disposing of a photosensitive element 2 with a larger area. In addition, the second surface 32 does not affect that the light is reflected by the third surface 33 and then transmitted by the second surface 32, so that manufacturing of the second optical element G2 is simpler and costs are lower.

In some embodiments, the first surface has an optical center point P, the first surface 31 and the second surface 32 have a first intersection point A, the second surface 32 and the third surface 33 have a second intersection point B, and a distance s1 from the first intersection point A to the optical center point P in the first direction and a distance s2 from the second intersection point B to the optical center point P in the first direction meet s2 > s1. The optical center point P is an intersection point between the first surface 31 and the optical axis. In this case, an optical axis of incident light on the first surface 31 may be disposed at a position closer to the first intersection point A, and the light is reflected for the first time mainly by using a partial structure on an upper side of the second optical element G2, and is reflected for the second time by using a partial structure on a lower side of the second optical element G2, so that both the upper part and the lower part of the second optical element G2 are fully utilized. In addition, angles of the first included angle $\alpha$ and the second included angle $\beta$ of the second optical element G2 are properly set, so that an optical axis of a light beam can be close to the center point of the second optical element G2 in the first direction, thereby improving utilization of the first surface 31.

For example, the distance s1 from the first intersection point A to the optical center point P in the first direction and the distance s2 from the second intersection point B to the optical center point P in the first direction meet 1 < (s2/s1) < 3. For example, a value of s2/s1 may be 1.5, 1.8, 2.1, 2.4, 2.7, or the like.

In some embodiments, a relationship between a width w of the second optical element G2 in the second direction and a height h1 of the second optical element G2 in the first direction meets 1 < (w/h1) < 1.75. For example, a value of w/h1 may be 1.1, 1.2, 1.3, 1.4, 1.5, 1.6, or the like. In this case, the width of the second optical element G2 in the second direction is greater than the height h1 of the second optical element G2 in the first direction. This helps to make the second surface 32 have a larger area, thereby facilitating disposing of a photosensitive element 2 with a larger area. In addition, a ratio of the width w to the height h1 is properly set, so that the second optical element G2 has a smaller height h1 and a smaller width w, and the camera module 30 has a smaller height and a smaller TTL.

In some embodiments, the optical camera lens 1 has a maximum image circle diameter mic, and a height h2 of the first surface 31 in the first direction and the maximum image circle diameter mic meet 1.5 < (mic/h2) < 3.5. For example, a value of mic/h2 may be 1.8, 2.1, 2.4, 2.7, 3.0, or the like. In this case, an image circle diameter of the optical camera lens 1 may be designed to be relatively large. Therefore, the photosensitive element 2 may also be designed to be relatively large, so that the camera module 30 has a stronger imaging capability.

In some embodiments, an object side surface of at least one lens of the optical camera lens 1 is a convex surface. In an implementation of this application, an object side surface of at least one lens of the optical camera lens 1 is disposed as a convex surface, to help correct spherical aberration of the optical camera lens 1 and improve imaging quality of the optical camera lens 1.

In some embodiments, all lenses in the optical camera lens 1 may be made of plastic materials or glass materials, or some lenses are made of plastic materials, and some lenses are made of glass materials.

In some embodiments, the object side surface or the image side surface of the lens in the optical camera lens 1 may be a spherical surface or an aspherical surface.

In some embodiments, when object side surfaces and/or image side surfaces of some lenses in the optical camera lens 1 are aspherical surfaces, the object side surfaces and/or the image side surfaces of the some lenses may be limited by using but not limited to the following aspherical surface formula:

$$z = \frac{cr^2}{1+\sqrt{1-Kc^2r^2}} + A_2 r^4 + A_3 r^6 + A_4 r^8 + A_5 r^{10} + A_6 r^{12};$$

where z is sagitta height of the aspherical surface, r is a normalized radial coordinate of the aspherical surface, r is equal to an actual radial coordinate of the aspherical surface divided by a normalization radius R (1 herein), c is a vertex spherical curvature of the aspherical surface, K is a quadratic surface constant, and A2, A3, A4, A5, and A6 are aspherical coefficients.

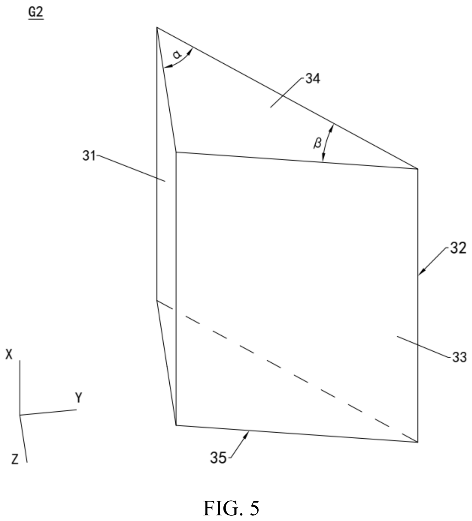

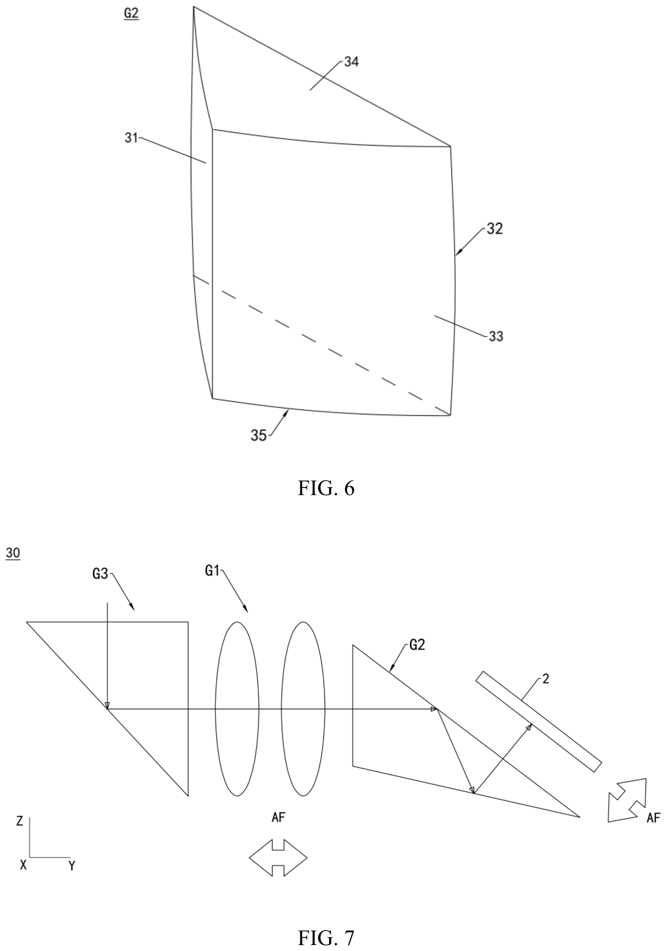

Refer to FIG. 4A, FIG. 5, and FIG. 6. FIG. 5 is a diagram of a structure of the second optical element G2 shown in FIG. 4A in some embodiments, and FIG. 6 is a diagram of a structure of the second optical element G2 shown in FIG. 4A in some other embodiments.

In some embodiments, the second optical element G2 may further include a first side surface 34 and a second side surface 35. The first side surface 34 and the second side surface 35 are disposed back to back, and the first side surface 34 and the second side surface 35 may be arranged in a direction perpendicular to the first direction and the second direction. Both the first side surface 34 and the second side surface 35 may be connected to the first surface 31, the second surface 32, and the third surface 33.

For example, the first side surface 34 and the second side surface 35 may be disposed in parallel, and in the optical camera lens 1, the first side surface 34 and the second side surface 35 may be parallel to the first direction and the second direction. The first side surface 34 and the second side surface 35 may be used as fixed regions of the second optical element G2, and the first side surface 34 and the second side surface 35 may be fastened by using a fixing bracket (not shown in the figure), so that the second optical element G2 is fastened in the optical camera lens 1.

In some examples, the first surface 31 and the second surface 32, the first surface 31 and the third surface 33, and the second surface 32 and the third surface 33 may be adjacent and fastened, so that the second optical element G2 forms a triple prism. In this case, the second optical element G2 has a simple structure and manufacturing is relatively simple. In some other embodiments, a transition surface may exist between the first surface 31, the second surface 32, and the third surface 33, and the transition surface may be a cambered surface or a plane, to reduce a volume of the second optical element G2.

In some examples, a surface of the third surface 33 may be plated with a reflective film. The reflective film is configured to improve reflection efficiency of the third surface 33. The reflective film may be a metal film or a dielectric film, the metal film may be made of a metal material such as silver, and the dielectric film may be made of a polymer material.

As shown in FIG. 5, in some examples, the first surface 31, the second surface 32, and the third surface 33 may all be planes. The included angle between the first surface 31, the second surface 32, and the third surface 33 may be directly an included angle between planes. In this case, the second optical element G2 has a simple surface profile, and manufacturing is simpler.

As shown in FIG. 6, in some examples, one or more of the first surface 31, the second surface 32, and the third surface 33 may be surfaces having a focal power. A corresponding surface may be enabled to have a focal power by using a curved surface prism, or a corresponding surface may be enabled to have a focal power by using a cemented lens. In this case, a surface having a focal power is a curved surface, and the included angle between the first surface 31, the second surface 32, and the third surface 33 may be calculated by using a tangent plane at an intersection point between an optical axis of a light beam and the surface as an equivalent plane. In this case, a surface having a focal power in the first surface 31, the second surface 32, and the third surface 33 may be used to equalize aberration, which helps improve imaging quality of the camera module 30.

FIG. 7 is a diagram of focusing of the camera module 30 shown in FIG. 4A.

In some embodiments, in a focusing process of the optical camera lens 1 of the camera module 30, at least one lens in the first optical element G1 moves along the second direction. For example, a quantity of lenses in the first optical element G1 may be three, four, five, or the like. The quantity of lenses in the first optical element G1 is not limited in this embodiment of this application. Focusing of the optical camera lens 1 is implemented by moving at least one lens in the first optical element G1, and zooming can be implemented without a need to mount a plurality of optical camera lenses 1 in the electronic device, thereby reducing space occupied by the optical camera lens 1 and reducing costs.

For example, the first optical element G1 includes one movable lens group, or includes one movable lens group and at least one fixed lens group. In the focusing process of the optical camera lens 1, the movable lens group moves along the second direction. There is one movable lens group. Compared with disposing of a plurality of movable lens groups, a quantity of motors that drive the movable lens group to move is reduced, and the volume of the optical camera lens 1 is reduced. During focusing, only one movable lens group needs to be moved, which facilitates control and implements precise focusing.

It may be understood that in a focusing process, some or all lenses in the first optical element G1 may be moved.

In some embodiments, in a focusing process of the camera module 30, the photosensitive element 2 moves along a direction parallel to a photosensitive center line of the photosensitive element 2. The photosensitive center line of the photosensitive element 2 is an optical axis of a light beam incident into the photosensitive element 2. By moving the photosensitive element 2, the photosensitive element 2 may be directly aligned with a focal plane of the optical camera lens 1, thereby implementing precise focusing.

It may be understood that, movement of the photosensitive element 2 may be controlled by using a focus motor, so as to implement focusing.

In some embodiments, in a focusing process of the camera module 30, the first optical element G1 or the photosensitive element 2 may be independently controlled to implement focusing, or the first optical element G1 and the photosensitive element 2 may be synchronously controlled to implement focusing. This is not strictly limited in this embodiment.

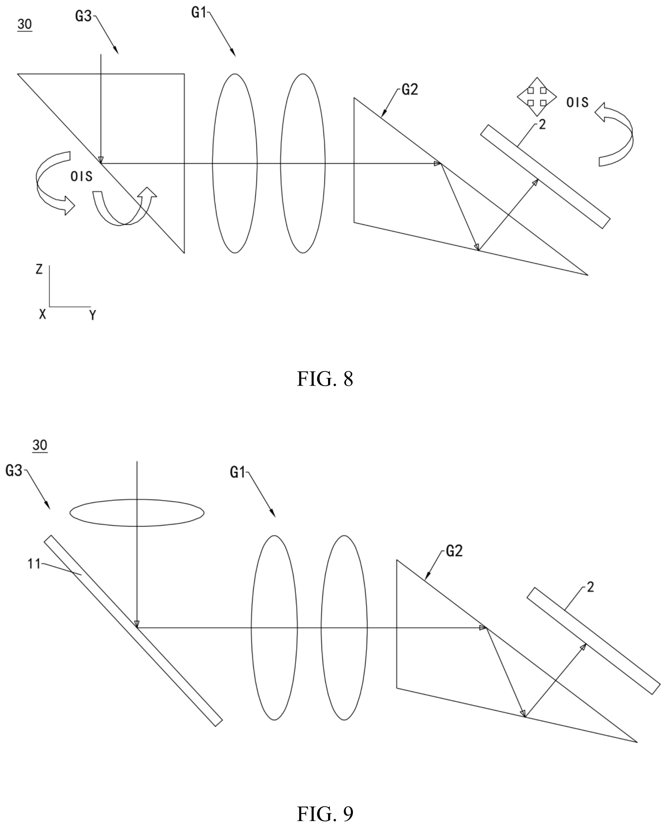

FIG. 8 is a diagram of image stabilization of the camera module 30 shown in FIG. 4A.

In some embodiments, in an image stabilization process of the optical camera lens 1 of the camera module 30, the third optical element G3 may rotate around an axis parallel to the first direction, and/or the third optical element G3 may rotate around an axis perpendicular to the first direction and the second direction. By moving the third optical element G3, light is relatively stable in the optical camera lens 1, thereby reducing imaging jitter and improving imaging quality of the optical camera lens 1.

In some embodiments, in the image stabilization process of the camera module 30, the photosensitive element 2 may rotate around an axis parallel to a photosensitive center line of the photosensitive element 2, and/or the photosensitive element 2 may move along a plane perpendicular to the photosensitive center line of the photosensitive element 2. By moving the photosensitive element 2, light incident into the photosensitive element 2 is kept stable relative to the photosensitive element 2, thereby reducing imaging jitter and improving imaging quality of the camera module 30.

In some embodiments, in the image stabilization process of the camera module 30, the third optical element G3 or the photosensitive element 2 may be independently controlled to implement image stabilization, or the first optical element G1 and the photosensitive element 2 may be synchronously controlled to implement joint image stabilization. This is not strictly limited in this embodiment.

It may be understood that a conventional image stabilization motor may drive the third optical element G3 or the photosensitive element 2 to move, to implement image stabilization of the camera module 30, thereby helping improve imaging quality of the camera module 30.

FIG. 9 is a diagram of a structure of the camera module 30 shown in FIG. 3 in some other embodiments. The camera module 30 shown in the embodiment in FIG. 9 may include most technical features of the camera module 30 shown in the embodiment in FIG. 4A. The following mainly describes differences between the two, and most technical content that is the same between the two is not described in detail.

A main difference between the camera module 30 shown in the embodiment in FIG. 9 and the camera module 30 shown in the embodiment in FIG. 4A lies in disposing of the third optical element G3. The first optical element G1, the second optical element G2, and the photosensitive element 2 of the two may be the same. For details, refer to related descriptions of the embodiment in FIG. 4A. Details are not described in this embodiment again.

In some embodiments, the third optical element G3 may further include a lens. The lens may be positioned on an image side or an object side of the direction changing element 11. A quantity of lenses may be one or more, and a plurality of lenses may form a lens group. The lens can increase an aperture and improve an optical path, to improve imaging quality of the optical camera lens 1, and can also reduce a transverse length, thereby reducing a transverse length of a camera. In some examples, the lens can also move in a direction of its optical axis to focus.

In some embodiments, the direction changing element 11 may be a reflector, and the reflector can directly reflect light, so that propagation of the light is changed from the first direction to the second direction. In this case, compared with a prism, the reflector has a lighter weight and a thinner size, thereby reducing a weight of the optical camera lens 1. In addition, the reflector is easily fastened by using another structure, and mounting reliability is high.

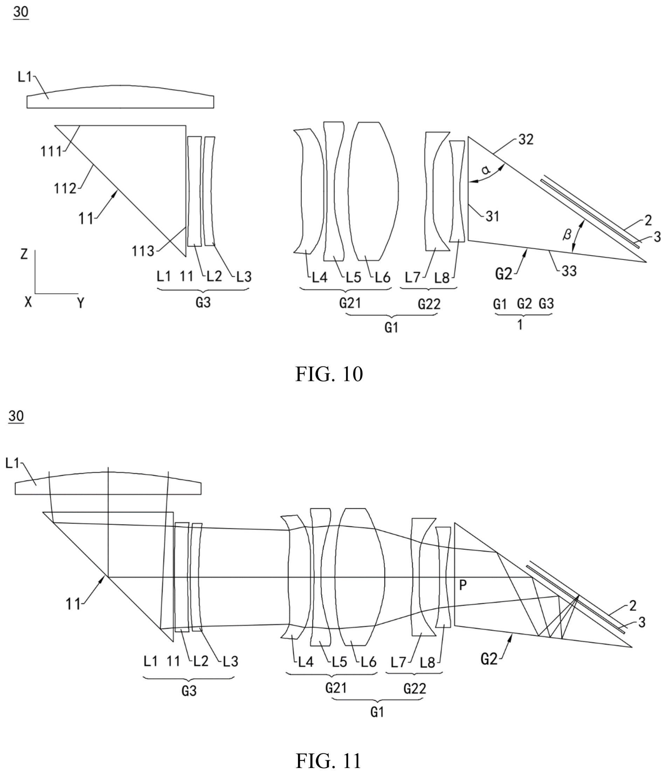

The following describes some specific but non-limiting examples of this application in more detail with reference to FIG. 10 to FIG. 22 by using three embodiments.

Embodiment 1

FIG. 10 is a diagram of a structure of the camera module 30 shown in FIG. 4A in some embodiments, and FIG. 11 is another diagram of a structure of the camera module 30 shown in FIG. 10 in some embodiments.

In this embodiment, the camera module 30 may include an optical camera lens 1, a photosensitive element 2, and a light filter 3. The optical camera lens 1, the photosensitive element 2, and the light filter 3 are arranged along an object side to an image side, and light sequentially passes through the optical camera lens 1, the light filter 3, and the photosensitive element 2 for imaging. The optical camera lens 1 may include a third optical element G3, a first optical element G1, and a second optical element G2.

The third optical element G3 includes a first lens L1, a direction changing element 11, a second lens L2, and a third lens L3 that are arranged along the object side to the image side. An incident surface of the third optical element G3 is formed on an object side surface of the first lens L1, and a convex surface is provided at a paraxial axis of the incident surface. The direction changing element 11 includes a reflective surface 112, and the reflective surface 112 is configured to change a propagation direction of an optical axis. An emergent surface of the first optical element G1 is formed on an image side surface of the third lens L3, and a concave surface is provided at a paraxial axis of the emergent surface. Light is incident into the third optical element G3 through the incident surface, the light is reflected by the reflective surface 112, the reflective surface 112 is configured to change a propagation direction of an optical axis, and the light is emitted out of the third optical element G3 through the emergent surface. The direction changing element 11 may be a prism. For example, the direction changing element 11 may be a triple prism.

For example, a focal power obtained by combining the second lens L2 and the third lens L3 may be negative. The second lens L2 and the third lens L3 are configured to equalize aberration.

The first optical element G1 includes a first lens group G21 and a second lens group G22 that are arranged from the object side to the image side. The first lens group G21 includes a fourth lens L4, a fifth lens L5, and a sixth lens L6 that are arranged along the object side to the image side. The second lens group G22 includes a seventh lens L7 and an eighth lens L8 that are arranged along the object side to the image side.

The first lens group G21 is a movable lens group, and the second lens group G22 is a fixed lens group. In a focusing process of the optical camera lens 1, the second lens group G22 may be moved toward the object side or the image side (moved in the second direction), to implement focusing.

The second optical element G2 is a triple prism. The second optical element G2 has a first surface 31, a second surface 32, and a third surface 33 that are connected to each other. The first surface 31 faces the first optical element G1, a first included angle $\alpha$ exists between the first surface 31 and the second surface 32, a second included angle $\beta$ exists between the third surface 33 and the second surface 32, a sum of the first included angle $\alpha$ and the second included angle $\beta$ is not equal to 90°, and the second included angle $\beta$ is less than 45°. Light emitted by the first optical element G1 is incident into the second optical element G2 through the first surface 31, is reflected by the second surface 32, then is reflected by the third surface 33, and is emitted out of the second optical element G2 through the second surface 32. For example, the first included angle $\alpha$ is 55°, and the second included angle $\beta$ is 27.5°.

In this case, the first surface 31 is configured to transmit light, so that the light enters the second optical element G2. The second surface 32 is configured to refract light, so that the light is folded for the first time in the second optical element G2. The second surface 32 is further configured to transmit light, so that the light is emitted out of the second optical element G2. The third surface 33 is configured to refract light, so that the light is folded for the second time in the second optical element G2. That is, light is incident into the second optical element G2 through the first surface 31, is incident into the second surface 32, so as to be reflected, then is incident into the third surface 33 to be reflected again, and finally is incident into the second surface 32 and emitted out of the second optical element G2.

In addition, because the second included angle $\beta$ is less than 45°, the second optical element G2 has a relatively small size in the first direction. This helps make a height of the first surface 31 in the first direction have a relatively small size, so that the second optical element G2 has a relatively small size in the first direction, that is, the second optical element G2 has a relatively small height.

In this embodiment of this application, the third optical element G3 may change a propagation direction of incident light of the optical camera lens 1, so as to facilitate flexible arrangement of the optical camera lens 1. When the optical camera lens 1 has a relatively long focal length, the optical camera lens 1 can be used in a relatively thin electronic device. The second optical element G2 is disposed so that the second optical element G2 reflects light twice, so that a path of the light is folded, and the optical camera lens 1 has a relatively short physical length. Therefore, a size of the optical camera lens 1 in the second direction can be shortened, achieving a miniaturized design of the optical camera lens 1.

In addition, a structure of the second optical element G2 is designed to reduce a height of the second optical element G2, allowing for a lower height of the optical camera lens 1. When the optical camera lens 1 is used in the camera module 30, it helps reduce a height of the camera module 30.

In addition, because of a structure arrangement of the second optical element G2, the first surface 31 and the second surface 32 have an included angle, and light is incident into the second optical element G2 through the first surface 31 and is emitted out of the second optical element G2 through the second surface 32, the second surface 32 has an included angle with the first direction. Therefore, the second surface 32 is subject to a relatively small size limitation in the first direction, and an area of the second surface 32 may be set to be relatively large. In this way, a photosensitive element 2 that matches the second surface 32 and has a relatively large photosensitive area can be selected, so that when an overall size of the optical camera lens 1 is limited, a large target surface of the camera module 30 is designed, and an imaging capability of the camera module 30 is improved.

Table 1a shows a curvature radius, a thickness, a material, and a curved surface coefficient of each lens, the direction changing element 11, the prism, and the light filter 3 of the camera module 30 shown in FIG. 10 in a possible embodiment. Table 1b shows an aspheric coefficient of each lens of the optical camera lens 1 shown in FIG. 10 in a possible embodiment.

Infinity indicates infinity, E indicates a natural constant, and a material column shows a material grade.

Table 1a

| Surface number | Descriptions | Type | Curvature radius | Thickness | Material | Curved surface coefficient |
|---|---|---|---|---|---|---|
| 1 | L1 | Spherical | 1.80E+01 | 1.35E+00 | APL5014CL | 0.00E+00 |
| 2 | | Spherical | -2.81E+02 | 1.10E+00 | | 0.00E+00 |
| 3 | Direction changing element | Spherical | Infinity | 4.00E+00 | BK7 | 0.00E+00 |
| 4 | | Spherical | Infinity | 4.00E+00 | BK7 | 0.00E+00 |

(continued)

| Surface number | Descriptions | Type | Curvature radius | Thickness | Material | Curved surface coefficient |
|---|---|---|---|---|---|---|
| 5 | | Spherical | Infinity | 1.00E-01 | | 0.00E+00 |
| 6 | L2 | Aspherical | -4.39E+01 | 8.00E-01 | OKP1 | 0.00E+00 |
| 7 | | Aspherical | -3.85E+01 | 1.50E-01 | | 0.00E+00 |
| 8 | L3 | Aspherical | -5.08E+01 | 5.00E-01 | APL5014CL | 0.00E+00 |
| 9 | | Aspherical | 5.08E+01 | 0.00E+00 | | 0.00E+00 |
| 10 | | | Infinity | 5.48E+00 | | 0.00E+00 |
| 11 | L4 | Aspherical | 1.09E+01 | 1.42E+00 | OKP-C3 | 1.72E-01 |
| 12 | | Aspherical | -4.74E+02 | 1.80E-01 | | 1.76E-02 |
| 13 | L5 | Aspherical | -1.98E+01 | 4.70E-01 | OKP1 | -2.18E+01 |
| 14 | | Aspherical | 1.85E+01 | 8.00E-01 | | 9.06E+00 |
| 15 | L6 | Aspherical | 1.32E+01 | 3.10E+00 | APL5014CL | 9.36E-01 |
| 16 | | Aspherical | -7.04E+00 | 1.70E+00 | | -1.47E-01 |
| 17 | L7 | Aspherical | -5.57E+00 | 4.90E-01 | APL5014CL | 5.58E-01 |
| 18 | | Aspherical | -1.05E+01 | 1.16E+00 | | 2.98E+00 |
| 19 | L8 | Aspherical | -1.60E+03 | 4.20E-01 | APL5014CL | -5.31E-05 |
| 20 | | Aspherical | 7.35E+00 | 5.00E-01 | | 2.14E+00 |
| 21 | Third optical element | | Infinity | 4.50E+00 | S-LAH98 | |
| 22 | | | Infinity | 4.36E+00 | S-LAH98 | |
| 23 | | | Infinity | 2.50E+00 | S-LAH98 | |
| 24 | | | Infinity | 3.00E-01 | | |
| 25 | Light filter 3 | | Infinity | 2.10E-01 | BK7 | |
| 26 | | | Infinity | 3.00E-01 | | |
| 27 | Photosensitive element | | Infinity | 0.00E+00 | | |

Table 1b

| Surface number | A2 | A3 | A4 | A5 | A6 |
|---|---|---|---|---|---|
| 1 | -1.06E-04 | -2.63E-06 | 4.78E-08 | -3.80E-09 | 4.98E-11 |
| 2 | -7.29E-05 | -1.73E-06 | -2.60E-09 | -1.59E-09 | 2.79E-11 |
| 3 | 0.00E+00 | 0.00E+00 | 0.00E+00 | 0.00E+00 | 0.00E+00 |
| 4 | 0.00E+00 | 0.00E+00 | 0.00E+00 | 0.00E+00 | 0.00E+00 |
| 5 | 0.00E+00 | 0.00E+00 | 0.00E+00 | 0.00E+00 | 0.00E+00 |
| 6 | 1.07E-03 | -4.37E-05 | 1.32E-06 | 1.26E-08 | -2.23E-10 |
| 7 | 2.37E-03 | -1.03E-04 | 2.83E-06 | -9.82E-10 | 9.98E-10 |
| 8 | 2.73E-03 | -7.85E-05 | 2.48E-06 | -4.07E-09 | 1.99E-09 |
| 9 | 9.57E-04 | -5.38E-06 | 7.92E-07 | -3.61E-09 | 2.06E-09 |
| 10 | 0.00E+00 | 0.00E+00 | 0.00E+00 | 0.00E+00 | 0.00E+00 |
| 11 | -3.22E-03 | -1.82E-04 | -7.51E-06 | 1.45E-06 | -5.82E-08 |
| 12 | -4.09E-03 | -3.07E-05 | 7.60E-06 | -4.68E-07 | 4.89E-09 |

(continued)

| Surface number | A2 | A3 | A4 | A5 | A6 |
|---|---|---|---|---|---|
| 13 | 4.45E-03 | -3.03E-04 | 7.11E-06 | -3.30E-07 | 2.44E-09 |
| 14 | 4.56E-03 | -2.67E-04 | -9.24E-06 | 1.08E-06 | -3.18E-08 |
| 15 | -1.69E-03 | 1.19E-04 | -5.71E-06 | 5.18E-07 | -1.49E-08 |
| 16 | -2.89E-05 | -6.52E-07 | 2.15E-06 | -1.43E-07 | 9.96E-09 |
| 17 | 2.30E-02 | -2.70E-03 | 2.35E-04 | -1.13E-05 | 2.14E-07 |
| 18 | 2.40E-02 | -2.41E-03 | 1.62E-04 | -2.59E-06 | -1.18E-07 |
| 19 | -5.34E-03 | 4.06E-04 | -1.19E-05 | 2.63E-07 | 3.52E-08 |
| 20 | -9.34E-03 | 8.11E-04 | -6.51E-05 | 3.17E-06 | -8.35E-08 |

The optical camera lens 1 in this embodiment includes eight lenses, and a total of 16 aspherical surfaces.
The aspherical surface of the optical camera lens 1 in Table 1a may be defined by using, but not limited to, the following aspheric curve equation:

$$z = \frac{cr^2}{1+\sqrt{1-Kc^2r^2}} + A_2r^4 + A_3r^6 + A_4r^8 + A_5r^{10} + A_6r^{12};$$

where z is sagitta height of the aspherical surface, r is a normalized radial coordinate of the aspherical surface, r is equal to an actual radial coordinate of the aspherical surface divided by a normalization radius R (1 herein), c is a vertex spherical curvature of the aspherical surface, K is a quadratic surface coefficient, and A2, A3, A4, A5, and A6 are aspherical coefficients (refer to Table 1b).
A refractive index of the second optical element G2 is 1.5168, and an Abbe number thereof is 61.467. It may be understood that, this embodiment shows a grade of a material of each element, and a corresponding refractive index and Abbe number may be determined, which are not shown in this embodiment one by one.
Table 1c shows basic parameters of the camera module 30 shown in FIG. 10 in a possible embodiment.

Table 1c

| Object distance | Infinite far | 80 cm |
|---|---|---|
| f0 (mm) | 26.1948 | 17.15 |
| F-number | 2.2 | 2.6 |
| Y1 (mm) | 6.25 | 6.25 |
| MIC (mm) | 13.4 | 13.4 |
| h2 (mm) | 3.15*2 | 3.15*2 |
| TTL (mm) | 34.4 | 34.4 |
| Field of view | 28° | 28° |
| Reference wavelength | 650 nm,610 nm,555 nm,510 nm, and 470 nm | |

Table 1c shows related design parameters of imaging of the camera module 30 at infinite far and 80 cm.
f0 is a focal length of the optical camera lens 1, F is an F-number, Y1 is a half-image height, MIC is a maximum image circle diameter, h2 is a height of the first surface 31 of the second optical element G2 in the first direction, and TTL is a total length of an optical system.
In this embodiment, a value of mic/h2 is 2.13, a value of s2/s1 is 1.46, and a value of w/h1 is 1.76. In this case, an optical center point P of the second surface 32 is positioned at a midpoint of the first surface 31 in the first direction.

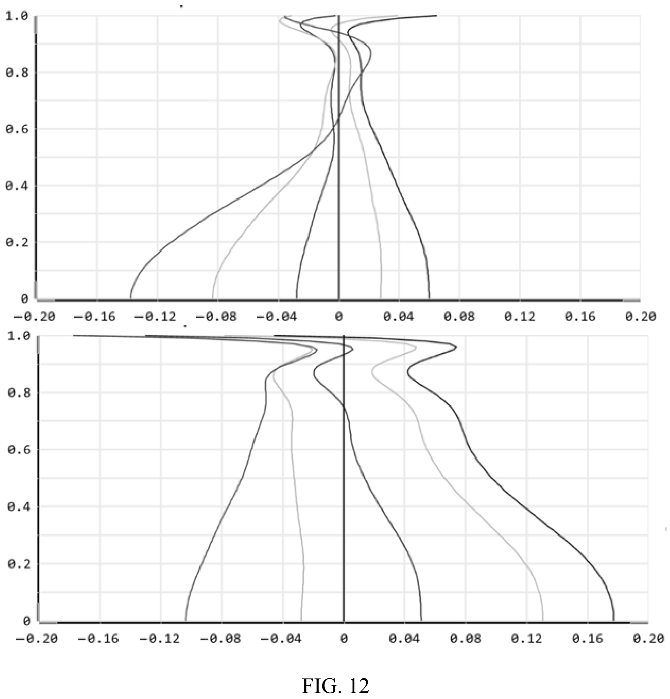

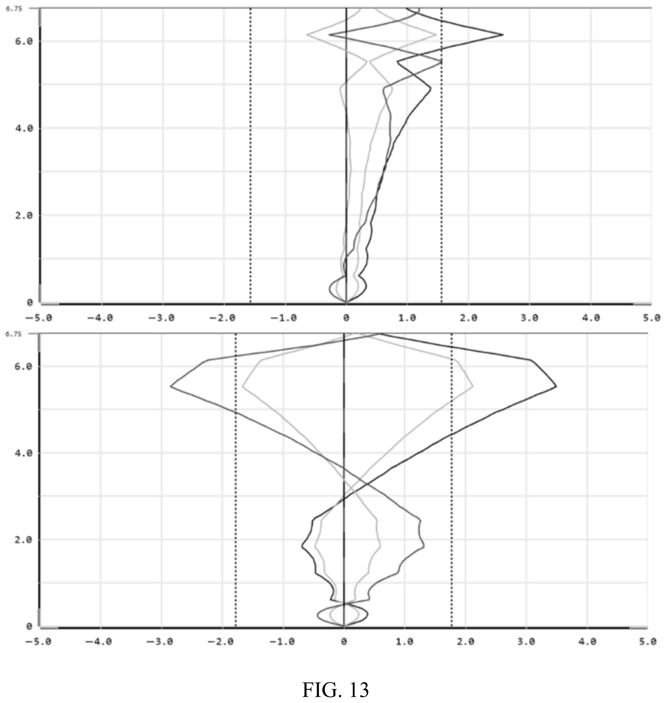

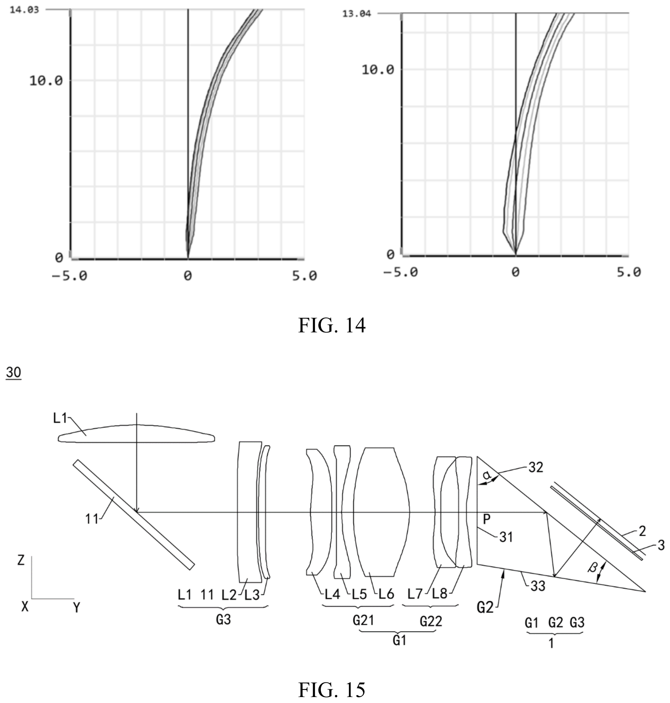

FIG. 12 is a simulated axial aberration diagram of the camera module 30 shown in FIG. 10 in a possible embodiment; FIG. 13 is a simulated transverse chromatic aberration diagram of the camera module 30 shown in FIG. 10 in a possible embodiment; and FIG. 14 is a simulated optical distortion diagram of the camera module 30 shown in FIG. 10 in a possible embodiment.
As shown in FIG. 12, axial chromatic aberration curves of the camera module 30 during imaging at infinite far and a near object distance are included, and simulation results of light focusing depth positions at different reference wavelengths are shown. The different reference wavelengths are 650 nm, 610 nm, 555 nm, 510 nm, and 470 nm. In the figure, a horizontal coordinate indicates a deviation value (mm) along an optical axis direction, and a vertical coordinate indicates a normalized coordinate at an optical pupil. It can be learned from the figure that axial aberration is controlled within a very small range.

As shown in FIG. 13, traverse chromatic aberration curves of the camera module 30 during imaging at infinite far and a near object distance are included and show simulation results of light XY coordinate positions at different reference wavelengths. The different reference wavelengths are 650 nm, 610 nm, 555 nm, 510 nm, and 470 nm. In the figure, a horizontal coordinate indicates a chromatic aberration value ($\mu$m), a vertical coordinate indicates a field of view, and a dashed line indicates a diffraction limit range. It can be learned from the figure that a traverse chromatic aberration range is within a very small range.

As shown in FIG. 14, distortion curves of the camera module 30 during imaging at infinite far and a near object distance are included and represent relative deviation amounts between light beam convergence points (actual image heights) of at different fields of view and a desirable image height. Different reference wavelengths are 650 nm, 610 nm, 555 nm, 510 nm, and 470 nm. A horizontal coordinate indicates a percentage (%), and a vertical coordinate indicates a field of view (degree). It can be learned from the figure that the camera module 30 controls distortion within a very small range.

Embodiment 2

FIG. 15 is a diagram of a structure of the camera module 30 shown in FIG. 4A in some other embodiments.

In this embodiment, the camera module 30 may include an optical camera lens 1, a photosensitive element 2, and a light filter 3. The optical camera lens 1, the photosensitive element 2, and the light filter 3 are arranged along an object side to an image side, and light sequentially passes through the optical camera lens 1, the light filter 3, and the photosensitive element 2 for imaging. The optical camera lens 1 may include a third optical element G3, a first optical element G1, and a second optical element G2.

The third optical element G3 includes a first lens L1, a direction changing element 11, a second lens L2, and a third lens L3 that are arranged along the object side to the image side. An incident surface of the third optical element G3 is formed on an object side surface of the first lens L1, and a convex surface is provided at a paraxial axis of the incident surface. The direction changing element 11 includes a reflective surface 112, and the reflective surface 112 is configured to change a propagation direction of an optical axis. An emergent surface of the first optical element G1 is formed on an image side surface of the third lens L3, and a concave surface is provided at a paraxial axis of the emergent surface. Light is incident into the third optical element G3 through the incident surface, the light is reflected by the reflective surface 112, the reflective surface 112 is configured to change a propagation direction of an optical axis, and the light is emitted out of the third optical element G3 through the emergent surface. The direction changing element 11 may be a reflector.

For example, a focal power obtained by combining the second lens L2 and the third lens L3 may be negative. The second lens L2 and the third lens L3 are configured to equalize aberration.

The first optical element G1 includes a first lens group G21 and a second lens group G22 that are arranged from the object side to the image side. The first lens group G21 includes a fourth lens L4, a fifth lens L5, and a sixth lens L6 that are arranged along the object side to the image side. The second lens group G22 includes a seventh lens L7 and an eighth lens L8 that are arranged along the object side to the image side.

The first lens group G21 is a movable lens group, and the second lens group G22 is a fixed lens group. In a focusing process of the optical camera lens 1, the second lens group G22 may be moved toward the object side or the image side (moved in the second direction), to implement focusing.

The second optical element G2 is a triple prism. The second optical element G2 has a first surface 31, a second surface 32, and a third surface 33 that are connected to each other. The first surface 31 faces the first optical element G1, a first included angle $\alpha$ exists between the first surface 31 and the second surface 32, a second included angle $\beta$ exists between the third surface 33 and the second surface 32, a sum of the first included angle $\alpha$ and the second included angle $\beta$ is not equal to 90°, and the second included angle $\beta$ is less than 45°. Light emitted by the first optical element G1 is incident into the second optical element G2 through the first surface 31, is reflected by the second surface 32, then is reflected by the third surface 33, and is emitted out of the second optical element G2 through the second surface 32. For example, the first included angle $\alpha$ is 55°, and the second included angle $\beta$ is 27.5°.

In this case, the first surface 31 is configured to transmit light, so that the light enters the second optical element G2. The second surface 32 is configured to refract light, so that the light is folded for the first time in the second optical element G2. The second surface 32 is further configured to transmit light, so that the light is emitted out of the second optical element G2. The third surface 33 is configured to refract light, so that the light is folded for the second time in the second optical element G2. That is, light is incident into the second optical element G2 through the first surface 31, is incident into the second surface 32, so as to be reflected, then is incident into the third surface 33 to be reflected again, and finally is incident into the second surface 32 and emitted out of the second optical element G2.

In addition, because the second included angle β is less than 45°, the second optical element G2 has a relatively small size in the first direction. This helps make a height of the first surface 31 in the first direction have a relatively small size, so that the second optical element G2 has a relatively small size in the first direction, that is, the second optical element G2 has a relatively small height.

In this embodiment of this application, the third optical element G3 may change a propagation direction of incident light of the optical camera lens 1, so as to facilitate flexible arrangement of the optical camera lens 1. When the optical camera lens 1 has a relatively long focal length, the optical camera lens 1 can be used in a relatively thin electronic device. The second optical element G2 is disposed so that the second optical element G2 reflects light twice, so that a path of the light is folded, and the optical camera lens 1 has a relatively short physical length. Therefore, a size of the optical camera lens 1 in the second direction can be shortened, achieving a miniaturized design of the optical camera lens 1.

In addition, a structure of the second optical element G2 is designed to reduce a height of the second optical element G2, allowing for a lower height of the optical camera lens 1. When the optical camera lens 1 is used in the camera module 30, it helps reduce a height of the camera module 30.

In addition, because of a structure arrangement of the second optical element G2, the first surface 31 and the second surface 32 have an included angle, and light is incident into the second optical element G2 through the first surface 31 and is emitted out of the second optical element G2 through the second surface 32, the second surface 32 has an included angle with the first direction. Therefore, the second surface 32 is subject to a relatively small size limitation in the first direction, and an area of the second surface 32 may be set to be relatively large. In this way, a photosensitive element 2 that matches the second surface 32 and has a relatively large photosensitive area can be selected, so that when an overall size of the optical camera lens 1 is limited, a large target surface of the camera module 30 is designed, and an imaging capability of the camera module 30 is improved.

Table 2a shows a curvature radius, a thickness, a material, and a curved surface coefficient of each lens, the direction changing element 11, the prism, and the light filter 3 of the camera module 30 shown in FIG. 15 in a possible embodiment. Table 2b shows an aspheric coefficient of each lens of the optical camera lens 1 shown in FIG. 15 in a possible embodiment.

Infinity indicates infinity, E indicates a natural constant, and a material column shows a material grade.

Table 2a

| Surface number | Descriptions | Type | Curvature radius | Thickness | Material | Curved surface coefficient |
|---|---|---|---|---|---|---|
| 1 | L1 | Aspherical | 1.56E+01 | 1.38E+00 | APL5014CL | 0.00E+00 |
| 2 | | Aspherical | 1.67E+02 | 6.36E+00 | | 0.00E+00 |
| 3 | L2 | Aspherical | -4.32E+01 | 1.23E+00 | OKP1 | 0.00E+00 |
| 4 | | Aspherical | -7.04E+01 | 4.17E-02 | | 0.00E+00 |
| 5 | L3 | Aspherical | -2.85E+01 | 4.17E-01 | APL5014CL | 0.00E+00 |
| 6 | | Aspherical | -6.77E+01 | 2.81E+00 | | 0.00E+00 |
| 7 | L4 | Aspherical | 1.02E+01 | 1.37E+00 | OKP-C3 | 4.37E-01 |
| 8 | | Aspherical | 2.13E+02 | 2.97E-01 | | 1.99E+03 |
| 9 | L5 | Aspherical | -1.79E+01 | 3.25E-01 | OKP1 | -1.88E+01 |
| 10 | | Aspherical | 1.86E+01 | 7.41E-01 | | 8.04E+00 |
| 11 | L6 | Aspherical | 1.22E+01 | 3.57E+00 | APL5014CL | 1.25E+00 |
| 12 | | Aspherical | -7.11E+00 | 1.60E+00 | | -3.43E-01 |
| 13 | L7 | Aspherical | -5.51E+00 | 4.39E-01 | APL5014CL | 6.98E-01 |
| 14 | | Aspherical | -9.18E+00 | 1.06E+00 | | 2.16E+00 |
| 15 | L8 | Aspherical | 1.94E+04 | 4.87E-01 | APL5014CL | 3.47E+07 |
| 16 | | Aspherical | 7.14E+00 | 6.11E-01 | | 2.06E+00 |
| 17 | Third optical element | | Infinity | 4.50E+00 | S-LAH98 | 0.00E+00 |
| 18 | | | Infinity | 4.36E+00 | S-LAH98 | 0.00E+00 |
| 19 | | | Infinity | 2.50E+00 | S-LAH98 | 0.00E+00 |

(continued)

| Surface number | Descriptions | Type | Curvature radius | Thickness | Material | Curved surface coefficient |
|---|---|---|---|---|---|---|
| 20 | | | Infinity | 9.98E-02 | | 0.00E+00 |
| 21 | Light filter | | Infinity | 2.10E-01 | BK7 | 0.00E+00 |
| 22 | | | Infinity | 4.03E-01 | | 0.00E+00 |
| 23 | Photosensitive element | | Infinity | 0.00E+00 | | 0.00E+00 |

Table 2b

| Surface number | A2 | A3 | A4 | A5 | A6 |
|---|---|---|---|---|---|
| 1 | -1.06E-04 | -2.63E-06 | 4.78E-08 | -3.80E-09 | 4.98E-11 |
| 2 | -7.29E-05 | -1.73E-06 | -2.60E-09 | -1.59E-09 | 2.79E-11 |
| 3 | 1.16E-03 | -4.20E-05 | 1.27E-06 | 7.88E-09 | -3.06E-10 |
| 4 | 2.21E-03 | -1.09E-04 | 2.77E-06 | 1.43E-08 | 1.52E-09 |
| 5 | 2.62E-03 | -8.31E-05 | 2.33E-06 | -7.57E-09 | 2.90E-09 |
| 6 | 1.02E-03 | -4.87E-06 | 7.45E-07 | -9.51E-09 | 7.52E-10 |
| 7 | -3.19E-03 | -1.78E-04 | -7.37E-06 | 1.47E-06 | -5.40E-08 |
| 8 | -3.97E-03 | -2.36E-05 | 8.18E-06 | -4.40E-07 | 3.80E-09 |
| 9 | 4.50E-03 | -2.96E-04 | 7.38E-06 | -3.24E-07 | 3.22E-09 |
| 10 | 4.51E-03 | -2.72E-04 | -9.20E-06 | 1.10E-06 | -3.06E-08 |
| 11 | -1.67E-03 | 1.21E-04 | -5.76E-06 | 5.14E-07 | -1.47E-08 |
| 12 | 7.10E-05 | 5.55E-06 | 2.47E-06 | -1.35E-07 | 9.32E-09 |
| 13 | 2.32E-02 | -2.66E-03 | 2.37E-04 | -1.12E-05 | 2.05E-07 |
| 14 | 2.42E-02 | -2.43E-03 | 1.64E-04 | -2.53E-06 | -1.13E-07 |
| 15 | -5.37E-03 | 4.05E-04 | -1.45E-05 | 6.11E-07 | 4.53E-08 |
| 16 | -9.50E-03 | 7.98E-04 | -6.34E-05 | 3.20E-06 | -8.53E-08 |

The optical camera lens 1 in this embodiment includes eight lenses, and a total of 16 aspherical surfaces.

The aspherical surface of the optical camera lens 1 in Table 2a may be defined by using, but not limited to, the following aspheric curve equation:

$$z = \frac{cr^2}{1+\sqrt{1-Kc^2r^2}} + A_2r^4 + A_3r^6 + A_4r^8 + A_5r^{10} + A_6r^{12};$$

where z is sagitta height of the aspherical surface, r is a normalized radial coordinate of the aspherical surface, r is equal to an actual radial coordinate of the aspherical surface divided by a normalization radius R (1 herein), c is a vertex spherical curvature of the aspherical surface, K is a quadratic surface coefficient, and A2, A3, A4, A5, and A6 are aspherical coefficients (refer to Table 2b).

A refractive index of the second optical element G2 is 1.5168, and an Abbe number thereof is 61.467. It may be understood that, this embodiment shows a grade of a material of each element, and a corresponding refractive index and Abbe number may be determined, which are not shown in this embodiment one by one.

Table 2c shows basic parameters of the camera module 30 shown in FIG. 15 in a possible embodiment.

Table 2c

| Object distance | Infinite far |
|---|---|
| f0 (mm) | 24.16 |

(continued)

| Object distance | Infinite far |
|---|---|
| F-number | 2.2 |
| Y1 (mm) | 5.5 |
| MIC (mm) | 11.8 |
| h2 (mm) | 3.11*2 |
| TTL (mm) | 32.3 |
| Field of view | 27.32° |
| Reference wavelength | 650 nm,610 nm,555 nm,510 nm, and 470 nm |

Table 2c shows related design parameters of imaging of the camera module 30 at infinite far and 80 cm.

f0 is a focal length of the optical camera lens 1, F is an F-number, Y1 is a half-image height, MIC is a maximum image circle diameter, h2 is a height of the first surface 31 of the second optical element G2 in the first direction, and TTL is a total length of an optical system.

In this embodiment, a value of mic/h2 is 1.90, a value of s2/s1 is 1.46, and a value of w/h1 is 1.76. In this case, an optical center point P of the second surface 32 is positioned at a midpoint of the first surface 31 in the first direction.

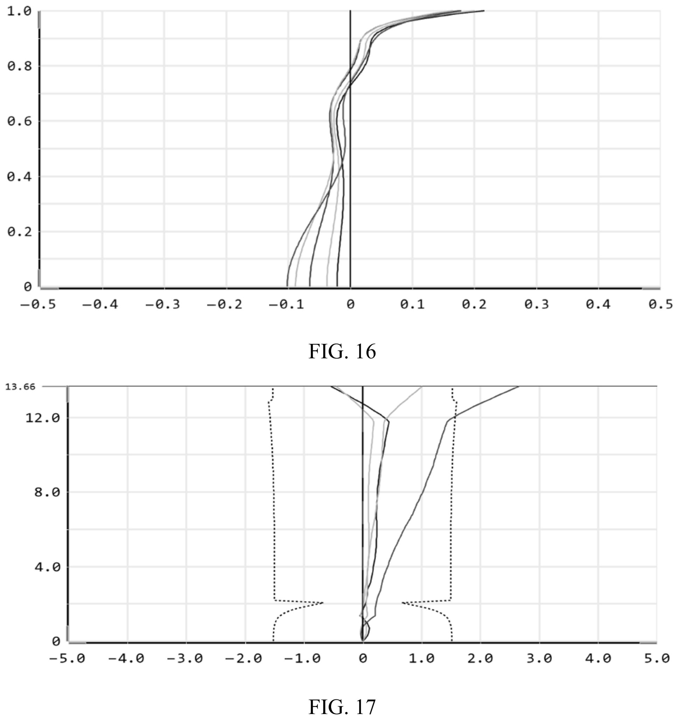

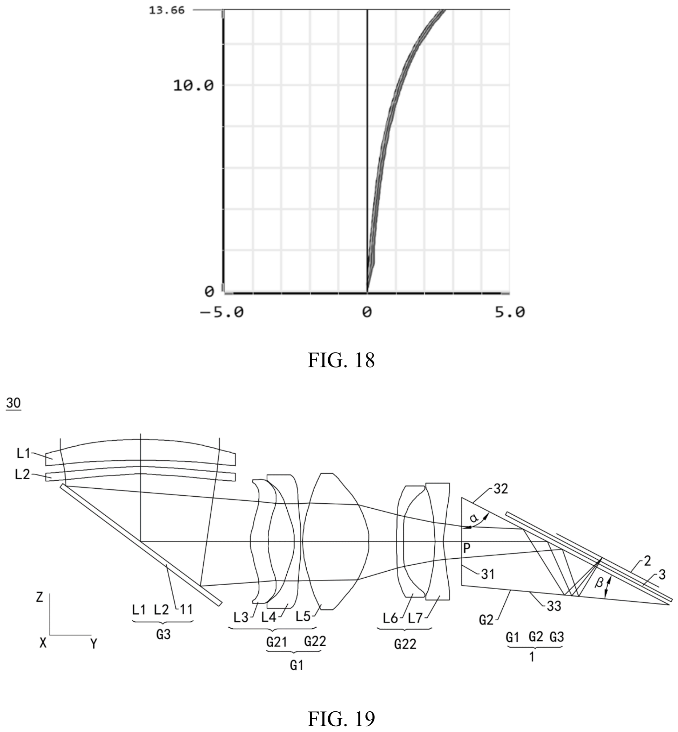

FIG. 16 is a simulated axial aberration diagram of the camera module 30 shown in FIG. 15 in a possible embodiment; FIG. 17 is a simulated transverse chromatic aberration diagram of the camera module 30 shown in FIG. 15 in a possible embodiment; and FIG. 18 is a simulated optical distortion diagram of the camera module 30 shown in FIG. 15 in a possible embodiment.

As shown in FIG. 16, axial chromatic aberration curves of the camera module 30 during imaging at infinite far and a near object distance are included, and simulation results of light focusing depth positions at different reference wavelengths are shown. The different reference wavelengths are 650 nm, 610 nm, 555 nm, 510 nm, and 470 nm. In the figure, a horizontal coordinate indicates a deviation value (mm) along an optical axis direction, and a vertical coordinate indicates a normalized coordinate at an optical pupil. It can be learned from the figure that axial aberration is controlled within a very small range.

As shown in FIG. 17, traverse chromatic aberration curves of the camera module 30 during imaging at infinite far and a near object distance are included and show simulation results of light XY coordinate positions at different reference wavelengths. The different reference wavelengths are 650 nm, 610 nm, 555 nm, 510 nm, and 470 nm. In the figure, a horizontal coordinate indicates a chromatic aberration value, a vertical coordinate indicates a field of view/image height, and a dashed line indicates a diffraction limit range. It can be learned from the figure that a traverse chromatic aberration range is within a very small range.

As shown in FIG. 18, distortion curves of the camera module 30 during imaging at infinite far and a near object distance are included and represent relative deviation amounts between light beam convergence points (actual image heights) of at different fields of view and a desirable image height. Different reference wavelengths are 650 nm, 610 nm, 555 nm, 510 nm, and 470 nm. A horizontal coordinate indicates a percentage (%), and a vertical coordinate indicates a field of view (degree). It can be learned from the figure that the camera module 30 controls distortion within a very small range.

Embodiment 3

FIG. 19 is a diagram of a structure of the camera module 30 shown in FIG. 4A in still some other embodiments.

In this embodiment, the camera module 30 may include an optical camera lens 1, a photosensitive element 2, and a light filter 3. The optical camera lens 1, the photosensitive element 2, and the light filter 3 are arranged along an object side to an image side, and light sequentially passes through the optical camera lens 1, the light filter 3, and the photosensitive element 2 for imaging. The optical camera lens 1 may include a third optical element G3, a first optical element G1, and a second optical element G2.

The third optical element G3 includes a first lens L1, a second lens L2, and a direction changing element 11 that are arranged along the object side to the image side. An incident surface of the third optical element G3 is formed on an object side surface of the first lens L1, and a convex surface is provided at a paraxial axis of the incident surface. The direction changing element 11 includes a reflective surface 112, and the reflective surface 112 is configured to change a propagation direction of an optical axis. Light is incident into the third optical element G3 through the incident surface, the light is reflected by the reflective surface 112, the reflective surface 112 is configured to change a propagation direction of an optical axis, and the light is emitted out of the third optical element G3 through the reflective surface 112. The direction changing element 11 may be a reflector.

22

The first optical element G1 includes a first lens group G21 and a second lens group G22 that are arranged from the object side to the image side. The first lens group G21 includes a third lens L3, a fourth lens L4, and a fifth lens L5 that are arranged along the object side to the image side. The second lens group G22 includes a sixth lens L6 and a seventh lens L7 that are arranged along the object side to the image side.

The first lens group G21 is a movable lens group, and the second lens group G22 is a fixed lens group. In a focusing process of the optical camera lens 1, the second lens group G22 may be moved toward the object side or the image side (moved in the second direction), to implement focusing.

The second optical element G2 is a triple prism. The second optical element G2 has a first surface 31, a second surface 32, and a third surface 33 that are connected to each other. The first surface 31 faces the first optical element G1, a first included angle $\alpha$ exists between the first surface 31 and the second surface 32, a second included angle $\beta$ exists between the third surface 33 and the second surface 32, a sum of the first included angle $\alpha$ and the second included angle $\beta$ is not equal to 90°, and the second included angle $\beta$ is less than 45°. Light emitted by the first optical element G1 is incident into the second optical element G2 through the first surface 31, is reflected by the second surface 32, then is reflected by the third surface 33, and is emitted out of the second optical element G2 through the second surface 32. For example, the first included angle $\alpha$ is 55°, and the second included angle $\beta$ is 27.5°.

In this case, the first surface 31 is configured to transmit light, so that the light enters the second optical element G2. The second surface 32 is configured to refract light, so that the light is folded for the first time in the second optical element G2. The second surface 32 is further configured to transmit light, so that the light is emitted out of the second optical element G2. The third surface 33 is configured to refract light, so that the light is folded for the second time in the second optical element G2. That is, light is incident into the second optical element G2 through the first surface 31, is incident into the second surface 32, so as to be reflected, then is incident into the third surface 33 to be reflected again, and finally is incident into the second surface 32 and emitted out of the second optical element G2.

In addition, because the second included angle $\beta$ is less than 45°, the second optical element G2 has a relatively small size in the first direction. This helps make a height of the first surface 31 in the first direction have a relatively small size, so that the second optical element G2 has a relatively small size in the first direction, that is, the second optical element G2 has a relatively small height.

In this embodiment of this application, the third optical element G3 may change a propagation direction of incident light of the optical camera lens 1, so as to facilitate flexible arrangement of the optical camera lens 1. When the optical camera lens 1 has a relatively long focal length, the optical camera lens 1 can be used in a relatively thin electronic device. The second optical element G2 is disposed so that the second optical element G2 reflects light twice, so that a path of the light is folded, and the optical camera lens 1 has a relatively short physical length. Therefore, a size of the optical camera lens 1 in the second direction can be shortened, achieving a miniaturized design of the optical camera lens 1.

In addition, a structure of the second optical element G2 is designed to reduce a height of the second optical element G2, allowing for a lower height of the optical camera lens 1. When the optical camera lens 1 is used in the camera module 30, it helps reduce a height of the camera module 30.

In addition, because of a structure arrangement of the second optical element G2, the first surface 31 and the second surface 32 have an included angle, and light is incident into the second optical element G2 through the first surface 31 and is emitted out of the second optical element G2 through the second surface 32, the second surface 32 has an included angle with the first direction. Therefore, the second surface 32 is subject to a relatively small size limitation in the first direction, and an area of the second surface 32 may be set to be relatively large. In this way, a photosensitive element 2 that matches the second surface 32 and has a relatively large photosensitive area can be selected, so that when an overall size of the optical camera lens 1 is limited, a large target surface of the camera module 30 is designed, and an imaging capability of the camera module 30 is improved.

Table 3a shows a curvature radius, a thickness, a material, and a curved surface coefficient of each lens, the direction changing element 11, the prism, and the light filter 3 of the camera module 30 shown in FIG. 19 in a possible embodiment. Table 3b shows an aspheric coefficient of each lens of the optical camera lens 1 shown in FIG. 19 in a possible embodiment.

Infinity indicates infinity, E indicates a natural constant, and a material column shows a material grade.

Table 3a

| Surface number | Descriptions | Type | Curvature radius | Thickness | Material | Curved surface coefficient |
|---|---|---|---|---|---|---|
| 1 | L1 | Aspherical | 1.21E+01 | 1.50E+00 | APL5014CL | 0 |
| 2 | | Aspherical | 3.60E+01 | 4.50E-01 | | 0 |
| 3 | L2 | Aspherical | 1.63E+01 | 5.00E-01 | OKP1 | 0 |

(continued)

| Surface number | Descriptions | Type | Curvature radius | Thickness | Material | Curved surface coefficient |
|---|---|---|---|---|---|---|
| 4 | | Aspherical | 1.29E+01 | 5.50E-01 | | 0 |
| 5 | Direction changing element | | Infinity | 8.00E+00 | | 0 |
| 6 | | | Infinity | 2.00E+00 | | 0 |
| 7 | AF | Aspherical | Infinity | 0.00E+00 | | 0 |
| 8 | L3 | Aspherical | 6.33E+00 | 9.10E-01 | APL5014CL | 0 |
| 9 | | Aspherical | 6.06E+00 | 1.37E+00 | | 0 |
| 10 | L4 | Aspherical | -5.63E+00 | 4.00E-0 1 | OKP1 | 0 |
| 11 | | Aspherical | -1.01E+01 | 1.00E-01 | | 0 |
| 12 | L5 | Aspherical | 8.80E+00 | 3.45E+00 | APL5014CL | 0 |
| 13 | | Aspherical | -6.27E+00 | 1.50E+00 | | 0 |
| 14 | AF | Aspherical | Infinity | 0.00E+00 | | 0 |
| 15 | L6 | Aspherical | -8.52E+00 | 3.80E-01 | APL5014CL | 0 |
| 16 | | Aspherical | -1.69E+01 | 1.66E+00 | | 0 |
| 17 | L7 | Aspherical | -1.21E+01 | 4.60E-01 | APL5014CL | 0 |
| 18 | | Aspherical | 1.63E+01 | 9.00E-01 | | 0 |
| 19 | Third optical element | | 1.08E+01 | S-LAH98 | | |
| 20 | | | 3.00E-01 | | | |
| 21 | Light filter | | 2.10E-01 | BK7 | | |
| 22 | | | 3.00E-01 | | | |
| 23 | Photosensitive element | | 0.00E+00 | | | |

Table 3b

| Surface number | A2 | A3 | A4 | A5 | A6 |
|---|---|---|---|---|---|
| 1 | 2.68E-05 | 1.25E-06 | -1.38E-07 | 6.48E-10 | 2.68E-05 |
| 2 | 3.63E-04 | -8.14E-06 | -1.86E-07 | 2.90E-09 | 3.63E-04 |
| 3 | -4.99E-04 | 1.28E-06 | -3.20E-07 | 3.98E-09 | -4.99E-04 |
| 4 | -9.21E-04 | 1.12E-05 | -3.73E-07 | 3.49E-09 | -9.21E-04 |
| 5 | 0.00E+00 | 0.00E+00 | 0.00E+00 | 0.00E+00 | 0.00E+00 |
| 6 | 0.00E+00 | 0.00E+00 | 0.00E+00 | 0.00E+00 | 0.00E+00 |
| 7 | 0.00E+00 | 0.00E+00 | 0.00E+00 | 0.00E+00 | 0.00E+00 |
| 8 | -3.16E-03 | -5.08E-06 | -7.19E-06 | 1.15E-07 | -3.16E-03 |
| 9 | -4.37E-03 | 3.10E-05 | -4.97E-06 | -1.27E-08 | -4.37E-03 |
| 10 | 5.06E-03 | -1.94E-04 | 4.92E-06 | -2.62E-07 | 5.06E-03 |
| 11 | 4.30E-03 | -1.13E-04 | -1.80E-06 | 3.45E-08 | 4.30E-03 |
| 12 | -1.83E-03 | 8.14E-05 | -2.64E-06 | 3.59E-08 | -1.83E-03 |
| 13 | 2.65E-04 | 9.05E-06 | 3.50E-08 | 1.91E-08 | 2.65E-04 |
| 14 | 0.00E+00 | 0.00E+00 | 0.00E+00 | 0.00E+00 | 0.00E+00 |
| 15 | 1.56E-02 | -1.08E-03 | 3.70E-05 | -4.66E-07 | 1.56E-02 |

(continued)

| Surface number | A2 | A3 | A4 | A5 | A6 |
|---|---|---|---|---|---|
| 16 | 1.66E-02 | -8.15E-04 | 1. 19E-05 | 4.20E-07 | 1.66E-02 |
| 17 | 2.48E-03 | -1.93E-04 | 8.96E-06 | -3.56E-07 | 2.48E-03 |
| 18 | 9.02E-04 | -1.77E-04 | 7.55E-06 | -2.19E-07 | 9.02E-04 |

The optical camera lens 1 in this embodiment includes seven lenses, and a total of 14 aspherical surfaces.

The aspherical surface of the optical camera lens 1 in Table 3a may be defined by using, but not limited to, the following aspheric curve equation:

$$z = \frac{cr^2}{1+\sqrt{1-Kc^2r^2}} + A_2r^4 + A_3r^6 + A_4r^8 + A_5r^{10} + A_6r^{12};$$

where z is sagitta height of the aspherical surface, r is a normalized radial coordinate of the aspherical surface, r is equal to an actual radial coordinate of the aspherical surface divided by a normalization radius R (1 herein), c is a vertex spherical curvature of the aspherical surface, K is a quadratic surface coefficient, and A2, A3, A4, A5, and A6 are aspherical coefficients (refer to Table 3b).

A refractive index of the second optical element G2 is 1.5168, and an Abbe number thereof is 61.467. It may be understood that, this embodiment shows a grade of a material of each element, and a corresponding refractive index and Abbe number may be determined, which are not shown in this embodiment one by one.

Table 3c shows basic parameters of the camera module 30 shown in FIG. 19 in a possible embodiment.

Table 3c

| Object distance | Infinite far | 80 cm |
|---|---|---|
| f0 (mm) | 24.001 | 16.13 |
| F-number | 2.2 | 2.3 |
| Y1 (mm) | 6.5 | 6.5 |
| MIC (mm) | 13.4 | 13.4 |
| h2 (mm) | 3.55*2 | 3.55*2 |
| TTL (mm) | 31.4 | 31.4 |
| Field of view | 30.36 | 30.36 |
| Reference wavelength | 650 nm,610 nm,555 nm,510 nm, and 470 nm | |

Table 3c shows related design parameters of imaging of the camera module 30 at infinite far and 80 cm.

f0 is a focal length of the optical camera lens 1, F is an F-number, Y1 is a half-image height, MIC is a maximum image circle diameter, h2 is a height of the first surface 31 of the second optical element G2 in the first direction, and TTL is a total length of an optical system.

In this embodiment, a value of mic/h2 is 1.89, a value of s2/s1 is 1.46, and a value of w/h1 is 1.76. In this case, an optical center point P of the second surface 32 is positioned at a midpoint of the first surface 31 in the first direction.

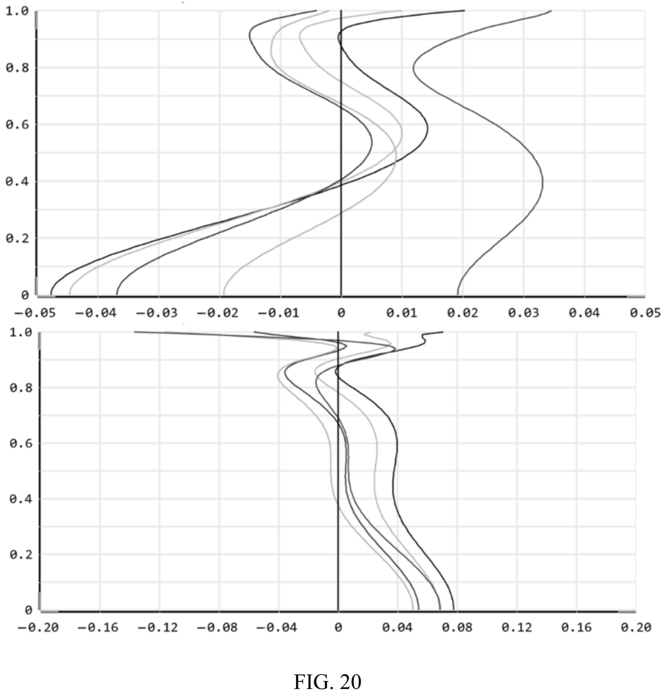

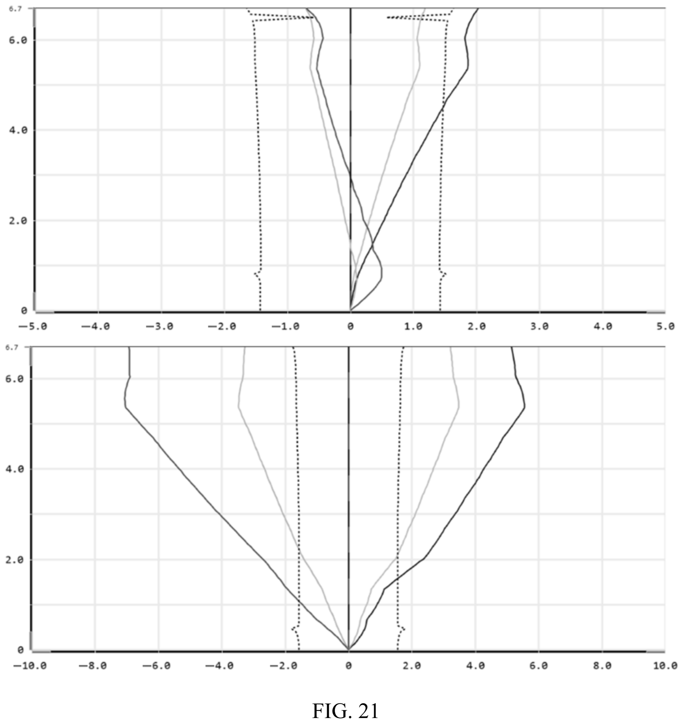

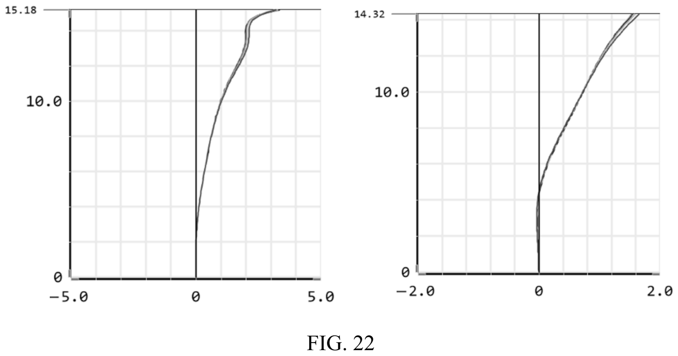

FIG. 20 is a simulated axial aberration diagram of the camera module 30 shown in FIG. 19 in a possible embodiment; FIG. 21 is a simulated transverse chromatic aberration diagram of the camera module 30 shown in FIG. 19 in a possible embodiment; and FIG. 22 is a simulated optical distortion diagram of the camera module 30 shown in FIG. 19 in a possible embodiment.

As shown in FIG. 20, axial chromatic aberration curves of the camera module 30 during imaging at infinite far and a near object distance are included, and simulation results of light focusing depth positions at different reference wavelengths are shown. The different reference wavelengths are 650 nm, 610 nm, 555 nm, 510 nm, and 470 nm. In the figure, a horizontal coordinate indicates a deviation value (mm) along an optical axis direction, and a vertical coordinate indicates a normalized coordinate at an optical pupil. It can be learned from the figure that axial aberration is controlled within a very small range.

As shown in FIG. 21, traverse chromatic aberration curves of the camera module 30 during imaging at infinite far and a near object distance are included and show simulation results of light XY coordinate positions at different reference wavelengths. The different reference wavelengths are 650 nm, 610 nm, 555 nm, 510 nm, and 470 nm. In the figure, a horizontal coordinate indicates a chromatic aberration value ($\mu$m), a vertical coordinate indicates a field of view, and a dashed line indicates a diffraction limit range. It can be learned from the figure that a traverse chromatic aberration range is within a very small range.

As shown in FIG. 22, distortion curves of the camera module 30 during imaging at infinite far and a near object distance are included and represent relative deviation amounts between light beam convergence points (actual image heights) of at different fields of view and a desirable image height. Different reference wavelengths are 650 nm, 610 nm, 555 nm, 510 nm, and 470 nm. A horizontal coordinate indicates a percentage (%), and a vertical coordinate indicates a field of view (degree). It can be learned from the figure that the camera module 30 controls distortion within a very small range.

It should be noted that embodiments in this application and features in embodiments may be combined with each other without a conflict, and any combination of features in different embodiments also falls within the protection scope of this application. In other words, the foregoing described plurality of embodiments may be further combined based on an actual requirement.

It should be noted that all the foregoing accompanying drawings are example illustrations of this application, and do not represent an actual size of a product. In addition, a size proportion relationship between the components in the accompanying drawings is not intended to limit an actual product in this application.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An optical camera lens (1), comprising a first optical element (G1) and a second optical element (G2), wherein the second optical element (G2) is positioned on an image side of the first optical element (G1);

    the first optical element (G1) comprises at least one lens;
    the second optical element (G2) comprises a first surface (31), a second surface (32), and a third surface (33) that are connected to each other, the first surface (31) faces the first optical element (G1), a first included angle $\alpha$ exists between the first surface (31) and the second surface (32), a second included angle $\beta$ exists between the third surface (33) and the second surface (32), a sum of the first included angle $\alpha$ and the second included angle $\beta$ is not equal to 90°, and the second included angle $\beta$ is less than 45°; and
    after passing through the first optical element (G1), an external light beam is incident into the second optical element (G2) through the first surface (31), is reflected by the second surface (32), then is reflected by the third surface (33), and is emitted out of the second optical element (G2) through the second surface (32).

2. The optical camera lens (1) according to claim 1, wherein the sum of the first included angle $\alpha$ and the second included angle $\beta$ is less than 90°.

3. The optical camera lens (1) according to claim 1 or 2, wherein the first included angle $\alpha$ and the second included angle $\beta$ meet:

$$|\alpha - 2 \text{ x } \beta| \leq 10° \text{ or } |\alpha - 2 \text{ x } \beta| = 0°.$$

4. The optical camera lens (1) according to any one of claims 1 to 3, wherein the second optical element (G2) has a refractive index greater than ($1/\sin\alpha$).

5. The optical camera lens (1) according to any one of claims 1 to 4, wherein the first surface (31) has an optical center point, the first surface (31) and the second surface (32) have a first intersection point, the second surface (32) and the third surface (33) have a second intersection point, and a distance s1 from the first intersection point to the optical center point in a first direction and a distance s2 from the second intersection point to the optical center point in the first direction meet s2 > s1 or 1 < (s2/s1) < 3;
    wherein the first direction is perpendicular to an optical axis of the first optical element (G1), and is parallel to a plane on which a normal direction of the first surface (31) and a normal direction of the second surface (32) are positioned.

6. The optical camera lens (1) according to any one of claims 1 to 5, wherein a relationship between a width w of the second optical element (G2) in a second direction and a height h1 of the second optical element (G2) in the first direction meets 1 < (w/h1) < 1.75;

wherein the first direction is perpendicular to the optical axis of the first optical element (G1), and is parallel to the plane on which the normal direction of the first surface (31) and the normal direction of the second surface (32) are positioned, and the second direction is parallel to the optical axis of the first optical element (G1).

7. The optical camera lens (1) according to any one of claims 1 to 6, wherein the optical camera lens (1) has a maximum image circle diameter mic, and a height h2 of the first surface (31) in the first direction and the maximum image circle diameter mic meet 1.5 < (mic/h2) < 3.5;

wherein the first direction is perpendicular to the optical axis of the first optical element (G1), and is parallel to the plane on which the normal direction of the first surface (31) and the normal direction of the second surface (32) are positioned.

8. The optical camera lens (1) according to any one of claims 1 to 7, wherein one or more of the first surface (31), the second surface (32), and the third surface (33) are curved surfaces having a focal power.

9. The optical camera lens (1) according to any one of claims 1 to 8, wherein the third surface (33) is fastened to a reflective film.

10. The optical camera lens (1) according to any one of claims 1 to 9, wherein the optical camera lens (1) further comprises a third optical element (G3), and the third optical element (G3) is positioned on an object side of the first optical element (G1); and

the third optical element (G3) is configured to change a propagation direction of an optical axis from the first direction to the second direction, the first direction is perpendicular to the optical axis of the first optical element (G1), and is parallel to the plane on which the normal direction of the first surface (31) and the normal direction of the second surface (32) are positioned, and the second direction is parallel to the optical axis of the first optical element (G1).

11. The optical camera lens (1) according to claim 10, wherein the third optical element (G3) comprises at least one prism or reflector.

12. The optical camera lens (1) according to claim 11, wherein the second optical element (G2) is disposed so that in an image stabilization process of the optical camera lens (1), the third optical element (G3) rotates along an axis perpendicular to a plane on which the first direction and the second direction are positioned, and/or the second optical element (G2) rotates along an axis parallel to the first direction.

13. The optical camera lens (1) according to claim 11 or 12, wherein the second optical element (G2) is disposed so that at least one lens of the optical focusing element moves along the first direction in a focusing process of the optical camera lens (1).

14. A camera module (30), comprising a photosensitive element and the optical camera lens (1) according to any one of claims 1 to 12, wherein the photosensitive element is positioned on an image side of the optical camera lens (1).

15. The camera module (30) according to claim 14, wherein the first surface (31) is perpendicular to the second direction, and the photosensitive element is perpendicular to a center line of a light beam emitted out of the first optical element (G1).

16. The camera module (30) according to claim 14 or 15, wherein the photosensitive element is disposed so that in a focusing process of the camera module (30), the photosensitive element moves along a direction parallel to an optical axis of the photosensitive element; and/or

in an image stabilization process of the camera module (30), the photosensitive element rotates around an axis parallel to the optical axis of the photosensitive element, and/or the photosensitive element moves along a plane perpendicular to the optical axis of the photosensitive element.

17. An electronic device (100), comprising an image processor (60) and the camera module (30) according to any one of claims 14 to 16, wherein the image processor (60) is communicatively connected to the camera module (30), and the image processor (60) is configured to: obtain image data from the camera module (30), and process the image data.

FIG. 1

FIG. 2

30

FIG. 3

30

FIG. 4A

FIG. 4B

G2

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

EP 4 730 009 A1

FIG. 22

42

## INTERNATIONAL SEARCH REPORT

| International application No. |
| --- |
| **PCT/CN2025/076271** |

| A. | CLASSIFICATION OF SUBJECT MATTER |
| --- | --- |

G02B13/00(2006.01)i; G03B17/17(2021.01)i; G03B30/00(2021.01)i

According to International Patent Classification (IPC) or to both national classification and IPC

| B. | FIELDS SEARCHED |
| --- | --- |

Minimum documentation searched (classification system followed by classification symbols)

IPC: G02B G03B

Documentation searched other than minimum documentation to the extent that such documents are included in the fields searched

Electronic data base consulted during the international search (name of data base and, where practicable, search terms used)

CNABS; CNTXT; VEN; ENTXT; ENTXTC; CNKI: 镜头, 镜片, 透镜, 潜望, 棱镜, 钝角, 斜角, 二次, 两次, 再次, 反光, 折叠, 图像传感, 感光, 斜, 高度, 厚度, 低, 小, ccd, cmos, lens+, prism+, obtuse, angle, bevel, two, second, double, again, reflect +, fold+, imag+, sens+, inclin+, tilt+, slant+, height, thickness, low+, small+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 119045171 A (HUAWEI TECHNOLOGIES CO., LTD.) 29 November 2024 (2024-11-29) description, paragraphs [0003]-[0414], and figures 1-14B | 1-17 |
| X | CN 115437118 A (SAMSUNG ELECTRO-MECHANICS CO., LTD.) 06 December 2022 (2022-12-06) description, paragraphs [0006]-[0386], and figures 1-22 | 1-17 |
| X | CN 115469445 A (VIVO COMMUNICATION TECHNOLOGY CO., LTD.) 13 December 2022 (2022-12-13) description, paragraphs [0004]-[0085], and figures 1-8 | 1-17 |
| X | CN 115396574 A (GUANGDONG OPPO MOBILE COMMUNICATIONS CO., LTD.) 25 November 2022 (2022-11-25) description, paragraphs [0003]-[0081], and figures 1-13 | 1-17 |
| A | CN 219105259 U (ZHONGSHAN ZHONGYING OPTICAL CO., LTD.) 30 May 2023 (2023-05-30) entire document | 1-17 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 April 2025** | **20 April 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2025/076271**

| C. | DOCUMENTS CONSIDERED TO BE RELEVANT | |
|---|---|---|
| Category* | Citation of document, with indication, where appropriate, of the relevant passages | Relevant to claim No. |
| A | GB 191503496 A (PERISCOPES AND HYPOSCOPES LTD. et al.) 30 December 1915 (1915-12-30) <br> entire document | 1-17 |
| A | CN 115561881 A (HUAWEI TECHNOLOGIES CO., LTD.) 03 January 2023 (2023-01-03) <br> entire document | 1-17 |

Form PCT/ISA/210 (second sheet) (July 2022)

**INTERNATIONAL SEARCH REPORT**
**Information on patent family members**

International application No.

**PCT/CN2025/076271**

| Patent document cited in search report | | | Publication date (day/month/year) | Patent family member(s) | Publication date (day/month/year) |
|---|---|---|---|---|---|
| CN | 119045171 | A | 29 November 2024 | None | |
| CN | 115437118 | A | 06 December 2022 | None | |
| CN | 115469445 | A | 13 December 2022 | None | |
| CN | 115396574 | A | 25 November 2022 | None | |
| CN | 219105259 | U | 30 May 2023 | None | |
| GB | 191503496 | A | 30 December 1915 | None | |
| CN | 115561881 | A | 03 January 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410177143
- CN 202410205525